# EUROPEAN PATENT SPECIFICATION

(11) **EP 3 520 045 B1**
(45) Date of publication and mention of the grant of the patent: **24.11.2021**
(21) Application number: 18723105.5
(22) Date of filing: 11.04.2018
(51) Int. Cl.: G06Q 10/06, G06N 3/04, G06N 3/08, G06K 9/00, G06K 9/22, G06K 9/32, G06K 9/46, G06K 9/62, G06N 5/00, G06N 20/20, G06T 7/00, G06Q 10/00, G06Q 40/08, G06Q 50/30

(54) **IMAGE-BASED VEHICLE LOSS ASSESSMENT METHOD, APPARATUS, AND SYSTEM, AND ELECTRONIC DEVICE**
BILDBASIERTES VERFAHREN ZUR BEURTEILUNG VON FAHRZEUGVERLUST, VORRICHTUNG UND SYSTEM SOWIE ELEKTRONISCHE VORRICHTUNG
PROCÉDÉ, APPAREIL ET SYSTÈME D'ÉVALUATION DE PERTE DE VÉHICULE À BASE D'IMAGE, ET DISPOSITIF ÉLECTRONIQUE

(30) Priority: 11.04.2017 CN 201710232956
(43) Date of publication of application: 07.08.2019
(73) Proprietor: Advanced New Technologies Co., Ltd., George Town, Grand Cayman KY1-9008 (KY)
(72) Inventor: ZHANG, Haitao, Hangzhou, Zhejiang 311121 (CN); XU, Juan, Hangzhou, Zhejiang 311121 (CN); HOU, Jinlong, Hangzhou, Zhejiang 311121 (CN); WANG, Jian, Hangzhou, Zhejiang 311121 (CN); GUO, Xin, Hangzhou, Zhejiang 311121 (CN); CHENG, Danni, Hangzhou, Zhejiang 311121 (CN); HU, Yue, Hangzhou, Zhejiang 311121 (CN); WU, Bokun, Hangzhou, Zhejiang 311121 (CN); CHENG, Yanqing, Hangzhou, Zhejiang 311121 (CN)
(74) Representative: Fish & Richardson P.C.
(86) International application number: PCT/US2018/027194
(87) International publication number: WO 2018/191437

(56) References cited:
- WO-A1-2005/109263
- WO-A2-2013/093932
- DATABASE WPI Week 201644 Thomson Scientific, London, GB; AN 2016-38589L XP002781821, & CN 105 678 622 A (PINGAN SCI & TECHNOLOGY SHENZHEN CO LTD) 15 June 2016 (2016-06-15) cited in the application
- DATABASE WPI Week 201714 Thomson Scientific, London, GB; AN 2017-10178Y XP002781822, & CN 106 372 651 A (PING AN TECHNOLOGY SHENZHEN CO LTD) 1 February 2017 (2017-02-01)

## Description

### TECHNICAL FIELD

The present application belongs to the field of computer image data processing technologies, and in particular, relates to an image-based vehicle loss assessment method and apparatus, and an electronic device.

### BACKGROUND

When a traffic accident occurs, it is often necessary to wait for a claims adjuster for an insurance company to go to the accident scene to process and require a claim bases through photographing. With the increase in motor vehicles ownership in recent years, the number of annual traffic accidents has been at a high level. However, vehicle loss assessment claims service processing often depends on on-site processing by professional insurance staff, which can result in high costs, a long waiting period, and low processing efficiency.

Currently, there are some processing methods in which traffic accident scene pictures are automatically analyzed to obtain predetermined classifications of predetermined auto damage parts. For example, an invention with a publication number CN 105678622A entitled "Analysis Method And System For Vehicle Insurance Claims Settlement Photos" discloses an algorithm of using a conventional convolutional neural network (CNN) to analyze claims settlement photos uploaded by a mobile terminal to identify damaged part classifications, and generate notification information based on the analysis result. However, the foregoing method simply determines classifications of vehicle damaged parts, such as the front, the side, or the rear of the car. No specific damage type is identified. The notification information of the identified damaged part is mainly used by staff of the insurance company to manually compare with manual loss assessment, and used as reference information to help the staff of the insurance company in loss assessment calculation. In addition, the algorithm uses only a general object identification algorithm of the CNN. A result of final vehicle loss assessment still depends on manual verification. The manpower and time costs are relatively large, and different insurance companies have different standards for vehicle loss assessment. Further, influenced by the subjective factors of human beings, results of the vehicle loss assessment vary greatly and reliability is relatively low.

WO 2013/093932 A2 describes assessing damage in a damaged object. Visual data is used to create one or more multi-dimensional representations of the damaged object, where a multi-dimensional representation of the damaged object includes a collection of characteristic points representing the object in multiple dimensions. An active contours technique is applied to the multi-dimensional representations of the damaged object to determine a shape of the damaged object. The determined shape is compared to a known shape of a reference vehicle to assess the extent of damage to the damaged vehicle in percentage with respect to the reference vehicle. For example, the extent of damage to the vehicle may be categorized into four classes - mild damage meaning 0-20% damage, moderate damage meaning 20-40% damage, severe damage meaning 40-70% damage and fatal damage meaning above 70% damage. The extent of damage can be used to prepare an insurance claim report that includes an estimated cost of repair.

WO 2005/109263 A1 describes a process and system for analyzing deformations in motor vehicles.

CN 106 372 651 A describes algorithms that use convolutional neural network techniques to determine whether the picture quality of photos provided for car insurance claim settlement are adequate or not.

### SUMMARY

The present application aims to provide an image-based vehicle loss assessment method and apparatus and an electronic device, to quickly, accurately, and reliably identify specific information about a damaged part and a degree of a damaged vehicle component. A result of the loss assessment can be more accurate and reliable, vehicle loss assessment processing can be quickly and efficiently performed, and user experience is greatly improved.

The present invention is defined by the appended claims.

Based on the image-based vehicle loss assessment method, apparatus, and a system, and the electronic device provided in the present application, the damaged component included in the to-be-processed images can be identified, and then the damaged part in the damaged component and the damage type corresponding to each damaged part can be identified based on the constructed damage identification model. Therefore, vehicle loss assessment information of the vehicle component can be accurately, comprehensively, and reliably obtained. In the implementation solution of the present application, one or more damaged components in one or more images, one or more damaged parts in the damaged components, damage degrees, etc. can be identified. In addition, for a local detail image of a similar vehicle component, a component type can also be accurately determined, and reliability of information about vehicle loss assessment obtained through calculation is improved, so that a result of an image-based vehicle loss assessment can be more reliable, the accuracy and reliability of a result of the vehicle loss assessment processing are improved, and user experience are improved.

### BRIEF DESCRIPTION OF DRAWINGS

To describe the technical solutions in the implementations of the present application or in the existing technology more clearly, the following briefly introduces the accompanying drawings required for describing the implementations or the existing technology. Apparently, the accompanying drawings in the following description merely show some implementations recorded in the present application, and a person of ordinary skill in the art can still derive other drawings from these accompanying drawings without creative efforts.
FIG. 1 is a flowchart illustrating an image-based vehicle loss assessment method, according to an implementation of the present application;
FIG. 2 is a schematic diagram illustrating an example process of identifying a vehicle component in a local image, according to an implementation of the present application;
FIG. 3 is a schematic diagram illustrating a processing process of identifying a component image, according to the present application;
FIG. 4 is a schematic diagram illustrating a specific scenario of matching a component in a local image by using a component image, according to the present application;
FIG. 5 is a schematic diagram illustrating a network architecture of a damage identification model, according to an implementation of the present application;
FIG. 6 is a schematic diagram illustrating a network architecture of a component identification model, according to an implementation of the present application;
FIG. 7 is a schematic diagram illustrating a method procedure of an image-based vehicle loss assessment method, according to another implementation of the present application;
FIG. 8 is a schematic diagram illustrating a method for determining a damaged component, a damaged part in the damaged component, and a damage type, according to the present application;
FIG. 9 is a schematic diagram illustrating a module structure of an image-based vehicle loss assessment apparatus, according to an implementation of the present application;
FIG. 10 is a schematic diagram illustrating a module structure of an image-based vehicle loss assessment apparatus, according to another implementation of the present application;
FIG. 11 is a schematic diagram illustrating a module structure of a second component identification module, according to an implementation of the present application;
FIG. 12 is a schematic structural diagram illustrating an electronic device, according to an implementation of the present invention; and
FIG. 13 is a schematic diagram illustrating a processing scenario of vehicle loss assessment, according to an implementation of the present application.
FIG. 14 is a flowchart illustrating an example of a computer-implemented method for generating a maintenance plan, according to an implementation of the present disclosure.

### DESCRIPTION OF EMBODIMENTS

To make a person skilled in the art understand the technical solutions in the present application better, the following clearly and completely describes the technical solutions in the implementations of the present application with reference to the accompanying drawings in the implementations of the present application.

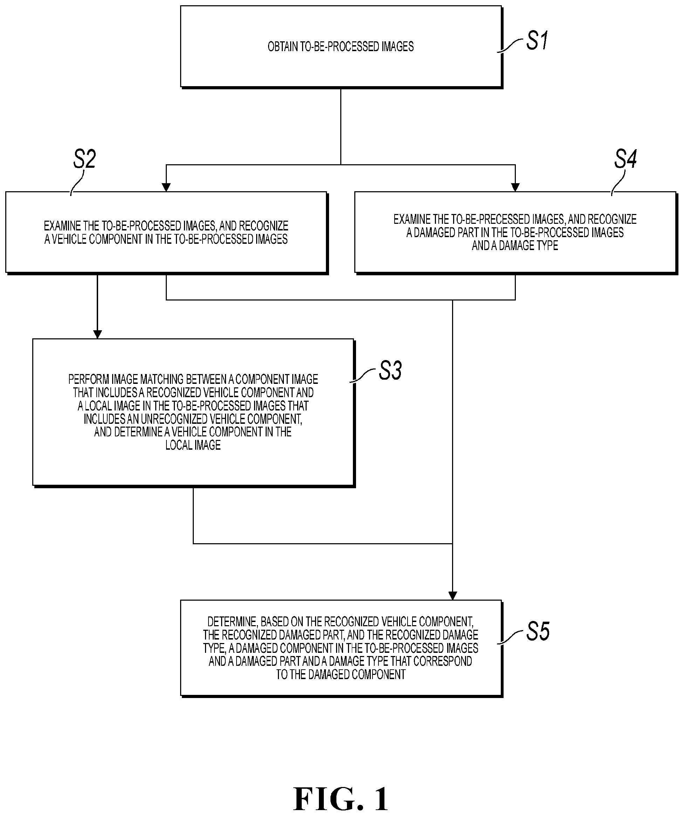

FIG. 1 is a flowchart illustrating an image-based vehicle loss assessment method, according to an implementation of the present application. The present application provides operation steps in a method or a structure of an apparatus shown in the following implementations or the accompanying drawings. However, conventionally or without creative efforts, the method or the apparatus can include more operation steps, or fewer operations steps after local combination, or the apparatus can include more module units, or fewer modules units after local combination. For steps or structures that do not logically have the necessary causal relationship, the order of execution of these steps, or the module structure of the device is not limited to the execution order or module structure shown in the implementations or the accompanying drawings of the present application. When the method or the module structure is applied to an actual apparatus, a server, or a terminal product, the method or the module structure can be sequentially executed or executed in parallel based on the method or the module structure shown in the implementations or the accompanying drawings (for example, an environment of a parallel processor or multithreaded processing, even including an implementation environment of distributed processing or server clustering).

Currently, when an actual traffic accident is processed, such as a scraping accident, it is generally necessary to wait for an insurance company's claims adjuster to come to the site and take pictures of the scene before evacuating the scene, thus often causing traffic congestion and wasting a lot of time and prolonging the waiting period of obtaining the loss assessment result information. However, according to the implementation of the present application, when a traffic accident occurs, an involved vehicle owner generally wants to know the loss or the loss assessment status of their own vehicle or the vehicle of another involved owner. In this case, the involved owner can take photos of the traffic accident scene. The photos can be used as evidence for the accident scene, and in addition, the photos can be further used for automatic vehicle loss assessment and claims status access through a terminal APP (application, application). As such, a requirement of the involved vehicle owner for fast, comprehensive, accurate, and reliable vehicle loss assessment processing is met.

For clarity, a specific application scenario in which a vehicle owner requests for a vehicle loss assessment service by using a mobile terminal APP is described in the following implementation. In the application scenario of this implementation, the vehicle owner can photograph a damaged vehicle part and the entire vehicle by using the mobile terminal (for example, a mobile phone) at a traffic accident scene. In some cases, the vehicle owner can further photograph a vehicle license, a user identity, etc. Afterwards, the vehicle owner user uploads the photographed photo (image) through the terminal application. After obtaining the to-be-processed images for vehicle loss assessment, a cloud server can first identify damaged components, one or more damaged parts in the damaged components, and corresponding damage type. Then, based on more accurate, reliable, and comprehensive information for vehicle loss assessment that is obtained based on the implementation solution of the present application, a rule engine can be designed to invoke different price databases based on maintenance strategy information such as a vehicle model, a location, a repair shop, etc., and ultimately generate at least one maintenance plan. The maintenance plan can be returned to the vehicle owner user, so that the vehicle owner can quickly obtain a result of vehicle loss assessment. Certainly, if the user is an insurance company staff, the user can return the maintenance plan to the insurance company, or directly display the result of the maintenance plan. However, a person skilled in the art can understand that the essence of the present solution can be applied to other implementation scenarios of vehicle loss assessment, such as automatic vehicle loss assessment of the insurance company or the repair shop, or self-service vehicle loss assessment service provided by authorized dealerships or other servers.

A specific implementation is shown in FIG 1. The present application provides an implementation of an image-based vehicle loss assessment method. The method can include the following steps:
S1: Obtain to-be-processed images.

A server can obtain to-be-processed images for vehicle loss assessment from a client or a third-party server (for example, a server of an insurance company). The to-be-processed images generally include image information about a plurality of images photographed on the scene by a vehicle owner or insurance company staff. The to-be-processed images can include an image of the vehicle, an image of the accident scene, etc., and certainly, can also include images of a vehicle license, a user identity, and a surrounding environment (such as a signal light, a landmark, etc.) information that are uploaded by the user. It is generally unsure whether these to-be-processed images are a plurality of photos of a single component. In this implementation, the to-be-processed image can include various graphics and photos, which generally is an image with a visual effect that can include an image on a piece of paper, an image on a film or a photo, an image on a television, an image on a projector or a computer screen, etc.

If the to-be-processed images include a plurality of types of image information, the to-be-processed images are classified by using an image classification algorithm, and the image related to vehicle loss assessment processing information is selected as the image for vehicle loss assessment processing. For example, classification can be performed by using the image classification algorithm to identify an image for vehicle loss assessment processing that is useful for identifying a damaged part and a damage type. Specific classification of the to-be-processed images can be classified and set based on a scenario processing requirement. For example, images for vehicle loss assessment processing need to include vehicle images. Therefore, the to-be-processed images can be classified into an image of a panoramic view of the entire vehicle, an image of a half view that contains a plurality of components, and an image of vehicle component details, etc. Images that are not related to the identification of a vehicle component or a damaged part in vehicle loss assessment processing can be separately classified or can be classified into a corresponding category. For example, an identification photo, a photo of a signal light at an accident spot, a portrait of the driver, etc. The image classification algorithm can use a convolutional neural network (CNN) model, such as a ResNet (Residual Network, residual network), which is trained by using classified images.

In an optional implementation, image quality of the to-be-processed images can further be examined, and a to-be-processed image whose image quality does not meet a requirement can be deleted. Specifically, it can be determined whether the image quality of the to-be-processed image satisfies a predetermined processing requirement. If the image quality is relatively poor, for example, a photo is blurry and cannot be identified, the component image can be discarded, and a feedback is sent to a mobile terminal APP to instruct the user to pay attention to factors that affect the clarity, such as the focus and the lighting, etc. during image photographing. The image quality can be determined based on a fuzzy degree threshold, an information entropy value, etc.

In another implementation, after the to-be-processed images are obtained, or after at least one of the foregoing image quality determining and image classification is processed, deduplication processing can further be performed on to-be-processed images whose similarity reaches a predetermined threshold. As such, images with high similarity that are repeatedly photographed at the same angle can be deleted, and a to-be-processed image with high image quality is selected for processing.

S2: Examine the to-be-processed images, and identify a vehicle component in the to-be-processed images.

In a scenario of this implementation, after obtaining the to-be-processed images, a cloud server examines the to-be-processed images by using a pre-constructed component identification model, to identify the vehicle component included in the to-be-processed images. If it is identified that one to-be-processed image includes one or more vehicle components, information about location regions (which can be referred to as component regions here) of the vehicle components in the to-be-processed image is determined through calculation. In this implementation, the vehicle component is generally a component on a vehicle, for example, a front bumper, a left front door, a rear tail lamp, etc.

In this implementation, a component identification model for identifying a vehicle component in an image is constructed in advance by using a designed machine learning algorithm. After the component identification model is trained on sample pictures, it can identify which vehicle components are included in the component image. In this implementation, a network model of a deep neural network or a variant network model can be trained by using sample image, to construct the component identification model. For example, the component identification model can be constructed and generated based on a convolutional neural network (Convolutional Neural Network, CNN) and a region proposal network (Region Proposal Network, RPN) with reference to a fully connected layer, a damage sample picture, etc. that trained by an input model. Therefore, in another implementation of the method of the present application, the following identification model is used to examine the to-be-processed images to identify the vehicle component:

S201: A deep neural network constructed and generated through sample data training based on network models of a convolution layer and a region proposal layer.

For the to-be-processed images, based on the image in which a vehicle component can be identified, a component type is identified by using the deep neural network. A convolutional neural network generally refers to a neural network that is mainly composed of a convolution layer (CNN) and other important layers such as an activation layer, and is mainly used for image identification. The deep neural network described in this implementation can include a convolution layer, and other important layers (such as a damage sample image trained by an input model, several normalized layers, and an activation layer), and establish a network together with the region proposal network. The convolutional neural network generally combines two-dimensional discrete convolution operations in image processing with an artificial neural network. The convolution operation can be used for automatic feature extraction. A feature (which can be a two-dimensional feature extracted by using the convolutional neural network) extracted from a picture (in any size) can be input to the region proposal network (RPN), and the region proposal network outputs a set of rectangular target proposal boxes. Each box includes a score of one object. To avoid confusion, in this implementation, the convolutional neural network (CNN) can be referred to as a convolution layer (CNN), and the region proposal network (RPN) can be referred to as a region proposal layer (RPN). In other implementations of the present application, the component identification model can further include an improved modified network model based on the convolutional neural network or the regional proposal network, and a deep convolutional neural network constructed and generated through sample data training.

The models and the algorithms used in the foregoing implementation can be models or algorithm of a same type. Specifically, for example, various models and variants that are based on the convolutional neural network and the region proposal network can be applied to the component identification model, such as Faster R-CNN, YOLO, and Mask-FCN. Any CNN model, such as ResNet, Inception, VGG, etc. and a variant of ResNet, Inception, VGG, etc., can be used for the convolutional neural network (CNN). Generally, a mature network structure, such as Inception or ResNet, which functions well in object identification can be used for a convolutional network (CNN) part in a neural network. For example, in the ResNet network, when input is a picture, the output can be a plurality of component regions, and their corresponding component classifications and confidence levels (the confidence level herein is a parameter indicating a degree of authenticity of an identified vehicle component). Faster R-CNN, YOLO, Mask-FCN, etc. are all deep neural networks that include a convolution layer and that can be applied to this implementation. The deep neural network used in this implementation can identify the vehicle component in the to-be-processed picture with reference to the region proposal layer and the CNN layer, and determine the component region of the vehicle component in the to-be-processed image.

It should be noted that in an implementation of the present application, a separate algorithm server can be used to implement the component identification model to examine the to-be-processed images and identify the vehicle component in the to-be-processed images. For example, a service server is set up to obtain a to-be-processed image uploaded by the user and output a maintenance plan. In addition, an algorithm server can further be set up to store a constructed component identification model, to examine and identify the to-be-processed image in the service server, and determine a vehicle component in the to-be-processed image. Certainly, the foregoing processing can also be executed by the same server.

S3: Perform image matching between a component image that includes an identified vehicle component and the local image in the to-be-processed images that fails to identify a vehicle component, and determine a vehicle component in the local image.

In this implementation of the present invention, the obtained to-be-processed images are generally of various types. For some images Tu, for example, for a local detail image of a component, a component type and a component location cannot be directly identified by using an algorithm model, etc. These images are referred to as a local image here. Therefore, in this implementation of the present application, a vehicle component in the local image is identified by using an algorithm model and other images that include an identified vehicle component. For example, performing image matching based on components that include a first vehicle component identified by the foregoing deep neural network, calculating which component images includes information about the local image. Eventually, the vehicle component (which can be a component type in the foregoing identified vehicle components) in the local image is determined based on the result of image matching.

Specifically, in an example, six of the ten images uploaded by the user include information about the vehicle itself, and the rest are images of identifications. Image PI from the six to-be-processed images is a local detail image of a component of the vehicle. A constructed component identification model cannot identify the component type and the component location in the image P1, but vehicle components included in the remaining five to-be-processed images are identified. In this case, the image PI can be matched to each of the remaining five images P2, P3, P4, P5, calculating and determining whether a location region in the five images matches image information of the image P1, and satisfies a requirement, for example, a matching degree is the highest and meet the lowest matching degree requirement. Data used for matching can be visual feature data of an image pixel, for example, RGB, a gradient, a gradation, etc., and certainly can also be other image data information. After image matching, it is identified that a local location of a vehicle component included in P2 is the most similar to a local location of a vehicle component in the image P1, and satisfies a requirement for minimum similarity. In this case, the vehicle component at a corresponding location in P2 can be used as an identified vehicle component in the image P1.

Conventional image transformation in the rectangular coordinate system can be linear transformation, such as, converting an image into a vector for multiplication. However, in vehicle loss assessment processing, a damaged component is probably deformed in comparison with image information in a normal state, or is displaced in comparison with an undamaged component. In another implementation of the method provided in the present application, affine transformation-based image data processing can be provided for such implementation scenario. Therefore, a component image can be more accurately identified, especially when it is an image of a damaged component. The affine transformation refers to a transformation that satisfies an affine combination, and can be understood as linear transformation plus translation. The linear transformation cannot indicate translation, but the affine transformation can indicate translation.

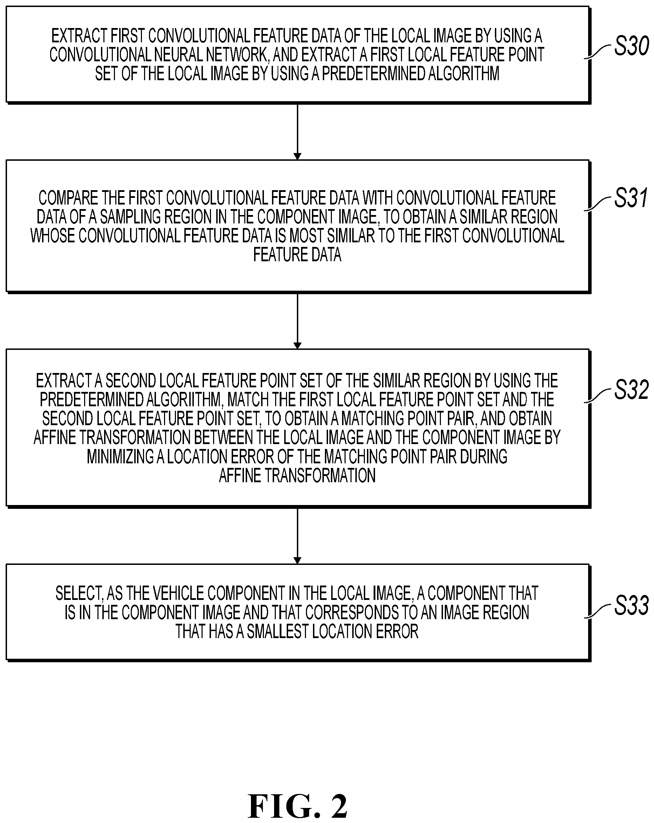

When the component type and the component location in the local image Tu are identified by using another image Tk, each image u in Tu is matched to an image in Tk, to find from Tk the image k that contains the locations included in u, and identify affine transformation between u and k, so as to obtain a component type and a component location in the image u. FIG. 2 is a schematic diagram illustrating an implementation process of identifying a vehicle component in a local image, according to the present application. As shown in FIG. 2, specific steps of the implementation process include:
S30: Extract first convolutional feature data of the local image by using a convolutional neural network, and extract a first local feature point set of the local image by using a predetermined algorithm.

In this implementation, first convolutional feature data x of a component image u can be extracted. For example, a convolutional neural network Np is constructed, and the last output vector of a pooling layer in the convolutional neural network Np is used as a convolutional network feature of the component image u.

The first local feature point set can be obtained by using scale-invariant feature transform (scale-invariant feature transform, SIFT), and a first local feature point set y of the image u is extracted. In an implementation of the present application, SIFT is used as local feature data of an image. Certainly, other feature data, for example, a feature such as a FAST (features from accelerated segment test, a corner detection method) can also be used in another implementation.

S31: Compare the first convolutional feature data with convolutional feature data of a sampling region in the component image, to obtain a similar region whose convolutional feature data is the most similar to the first convolutional feature data.

A plurality of sampling regions can be selected from the component image that is used for image matching. For example, the size of each sampling region is set to be the same as the size of the component image or a cropped component image, and the sampling regions are sequentially selected from the upper left corner of the component image. A set of sampling regions can be formed after all the sampling regions of the component image are obtained. Then convolutional feature data of each sampling region is computed, the foregoing first convolutional feature data is compared with the convolutional feature data of the sampling region in the component image, and the sampling region whose convolutional feature data is the most similar to the first convolutional feature data is obtained, and is used as a similar region.

In another implementation, that the first convolutional feature data is compared with the convolutional feature data of the sampling region in the component image, to obtain the similar region whose convolutional feature data is the most similar to the first convolutional feature data includes: for the component image, extracting second convolutional feature data of a sliding window region in the component image by using a sliding window, and obtaining a second convolutional feature data set, where the second convolutional feature data is obtained by using a convolutional neural network that is the same with the one used for extracting the convolutional feature data x; and selecting, from the second convolutional feature data set, the similar region whose convolutional feature data is the most similar to the first convolutional feature data.

In a specific example, for each image t in Tk, different sizes of sliding windows can be used to extract the second convolutional feature data of different regions in the component image, by using a convolutional neural network that is the same as the one used for extracting the first convolutional feature data x. A region r whose second convolutional feature data is the most similar to the first convolutional feature data x is selected from all regions. Similarity can be calculated by using cosine similarity.

S32: Extract a second local feature point set of the similar region by using the predetermined algorithm, match the first local feature point set and the second local feature point set, to obtain a matching point pair, and obtain affine transformation between the local image and the component image by minimizing a location error of the matching point pair during affine transformation.

A local feature point set of u is matched to a local feature point set of r, to obtain a group of matching point pairs, and then affine transformation is obtained by minimizing a location error of the matching point pair during affine transformation.

In another implementation, an image region range of the similar region can further be expanded in a predetermined manner, to obtain more local feature data in a larger range, and improve matching processing reliability. Correspondingly, the second local feature point set includes an extracted local feature point set of the similar region whose image region range is expanded.

The manner of expanding the image region range of the similar region in the predetermined manner can be customized based on a processing requirement. In an implementation of the present application, that the image region range of the similar region is expanded in the predetermined manner can include:

A left side, a right side, an upper side, and a lower side of the similar region are extended by a predetermined percentage. Alternatively, the image region range of the similar region is expanded within a predetermined percentage range, to include enough number of second local feature points. For example, to include twice the number of corresponding first local feature points. For example, the image region range of the similar region can be expanded by 50%, and each side of the similar region r is extended by 50% (an image is generally preprocessed to be a square image), so that a data requirement of feature extraction can be met, and a computing amount can be properly controlled.

S33: Select, as the vehicle component in the local image, a component that is in the component image and that corresponds to an image region that has a smallest location error.

An image region with a smallest matching error in S32 is selected as a matching image k of the component image u, and a component type corresponding to a corresponding region that is of the component image u and that is obtained on k through corresponding affine transformation is used as a component type in the component image u.

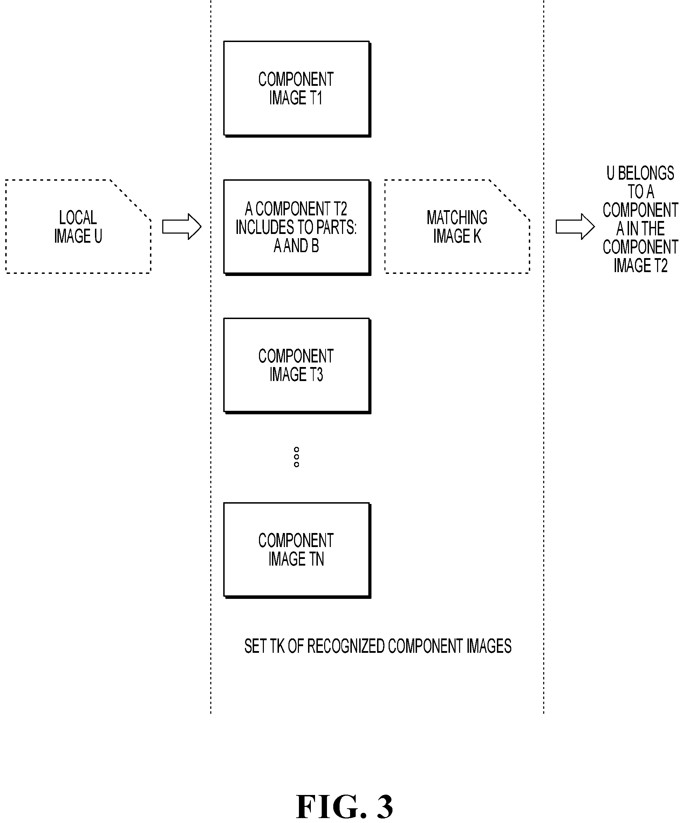

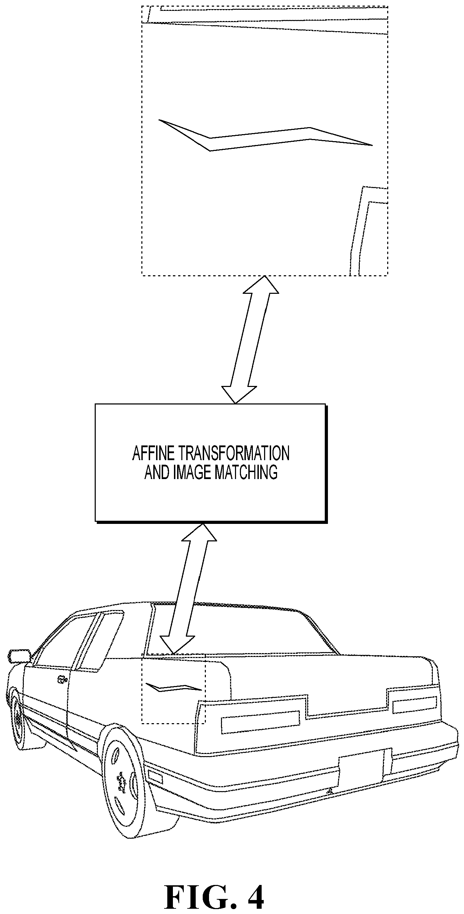

By using the processing manner provided in the foregoing implementation, when a specific component type in a to-be-processed image such as a local detail image of a component cannot be determined based on a single image, such local detail image can be matched to another to-be-processed image whose component type and component location are known, so as to determine a component type of a local detail image of the component. Specifically, in an example implementation, image matching can be performed by using a network structure of Siamese networks (Siamese network) and based on image SIFT and a CNN feature, to obtain affine transformation between matched images, so as to obtain a component type at a corresponding location and determine a second vehicle component in the local image. FIG 3 is a schematic diagram illustrating a processing process of identifying a component image, according to the present application. FIG 4 is a schematic diagram illustrating a specific scenario where a component image is used for matching to determine the component type of the local detail image. In FIG 4, only a scrape can be seen from a local image, but the component cannot be identified. After the local image is matched to a component image whose vehicle component has been identified, it is identified that the component that includes the damaged part in the local image in FIG 4 is a front bumper.

S4: Examine the to-be-processed images, and identify a damaged part and a damage type in the to-be-processed images.

After obtaining the to-be-processed images, a cloud server side examines the component image by using a pre-constructed damage identification model, to identify the damaged part and the damage type in the to-be-processed images. In this implementation, the damaged part is generally a part that is damaged on the vehicle. A damaged vehicle component can include a plurality of damaged parts, and each damaged part corresponds to a damage type (for example, a severe scrape or minor deformation). In this implementation, a location region of the damaged part in the to-be-processed picture (the location region can be referred to as a damage region here, and it can be understood that picture region data of a specific damage region corresponding to a damaged part or the damage region indicates entity data information of a damaged part) is identified, and the damage region is examined to identify a damage type. In this implementation, the damage type can include types such as a slight scrape, a severe scrape, minor deformation, moderate deformation, severe deformation, damage, and in need of disassembling for an examination.

In this implementation, a damage identification model used to identify a damaged part and a damage type in an image is pre-constructed by using a designed machine learning algorithm. After sample training, the damage identification model can identify one or more damaged parts in the to-be-processed images and corresponding damage types. In this implementation, the damage identification model can be constructed and generated through sample training by using a network model of a deep neural network or a variant network model. In another implementation of the method provided by the present application, the damage identification model can be constructed based on a convolutional neural network (Convolutional Neural Network, CNN) and a region proposal network (Region Proposal Network, RPN) with reference to a fully connected layer and damage sample pictures trained by an input model Therefore, in another implementation of the method of the present application, the following identification model is used to examine the to-be-processed images, to identify the damaged part and the damage type:

301: A deep neural network that is based on a network model of a convolution layer and a region proposal layer and constructed after training based on sample data.

The convolutional neural network generally refers to a neural network that is mainly composed of a convolution layer (CNN) and other structures such as an activation layer, and is mainly used for image recognition. In this implementation, the deep neural network can include a convolution layer and other important layers (such as damage sample pictures trained by an input model, several normalized layers, and an activation layer), and establish a network together with the region proposal network (RPN). The convolutional neural network generally combines a two-dimensional discrete convolution operation in image processing with an artificial neural network. A feature (which can be a two-dimensional feature extracted by using the convolutional neural network) extracted from a picture (in any size) can be input to the region proposal network (RPN), and the region proposal network outputs a set of rectangular target proposal boxes. Each box includes a score of one object. Likewise, to avoid confusion, in this implementation, the convolutional neural network (CNN) can be referred to as a convolution layer (CNN), and a region proposal network (RPN) can be referred to as a region proposal layer (RPN). In another implementation of the present application, the damage identification model can further include an improved modified network model based on the convolutional neural network or the regional proposal network, and a deep convolutional neural network constructed and generated through sample data training.

In the foregoing implementation, a plurality of damaged parts in a single damage sample image can be identified during model training. Specifically, during sample training, the input is a picture, and the output is a plurality of picture regions and corresponding damage types. A selected parameter of the neural network can be obtained through mini-batch gradient descent (mini-batch gradient descent) training by using marking data. For example, when mini-batch=32, 32 training images are simultaneously used as input for training. The marking data is an image marked with a region and a corresponding type, and can be obtained by manually marking a real vehicle damage image. In this neural network, input is an image, and an output region is related to a quantity of damaged parts in the image. Specifically, for example, if there is one damaged part, one image region is output; or if there are k damaged parts, k image regions can be output; or if there is no damaged part, zero image regions are output.

The models and the algorithms used in the foregoing implementation can be models or algorithms of a same type. Specifically, for example, various models and variants that are based on the convolutional neural network and the region proposal network can be applied to the component identification model, such as Faster R-CNN, YOLO, and Mask-FCN. Any CNN model, such as ResNet, Inception, VGG, etc. and a variant of ResNet, Inception, VGG, etc., can be used for the convolutional neural network (CNN). Generally, a mature network structure, such as Inception or ResNet, which functions well in object identification, can be used for a convolutional network (CNN) part in a neural network. For example, in ResNet, when input is a picture, the output can be a plurality of picture regions including the damaged part and its corresponding damage classifications (the damage classification is used to determine a damage type), and confidence levels (the confidence level herein is a parameter indicating a degree of authenticity of a damage type). Faster R-CNN, YOLO, Mask-FCN, etc. are all deep neural networks that include a convolution layer and that can be used in this implementation. Based on the region proposal layer and the CNN layer, the deep neural network used in this implementation can identify the damaged part, the damage type, and the location region of the damaged part in the component picture.

It should be noted that, in an implementation of the present application, an independent algorithm server can be used to examine the to-be-processed images and identify the damaged part and the damage type in the to-be-processed images. For example, a service server is set up to obtain a to-be-processed image uploaded by the user and output a maintenance plan. In addition, an algorithm server can further be set up to store a constructed damage identification model, to detect and identify the to-be-processed image of the service server, and determine information such as the damaged part, the damage type, and the damage region in the to-be-processed image. Certainly, the foregoing processing of obtaining the to-be-processed image and identifying the damaged part, the damage type, and the damage region can also be performed by one server.

A plurality of types of training data can be used in the foregoing component identification model and the damage identification model. For example, in an implementation, the component identification model is set to be trained by using component sample images including marking data. The component sample image includes at least one damaged component, and the damaged component includes at least one damaged part.

The damage identification model is set to output at least one damage part location and a damage type corresponding to the damaged part when a damage sample picture is input for model training, and data information of a confidence level that indicates an authenticity degree of the damage type.

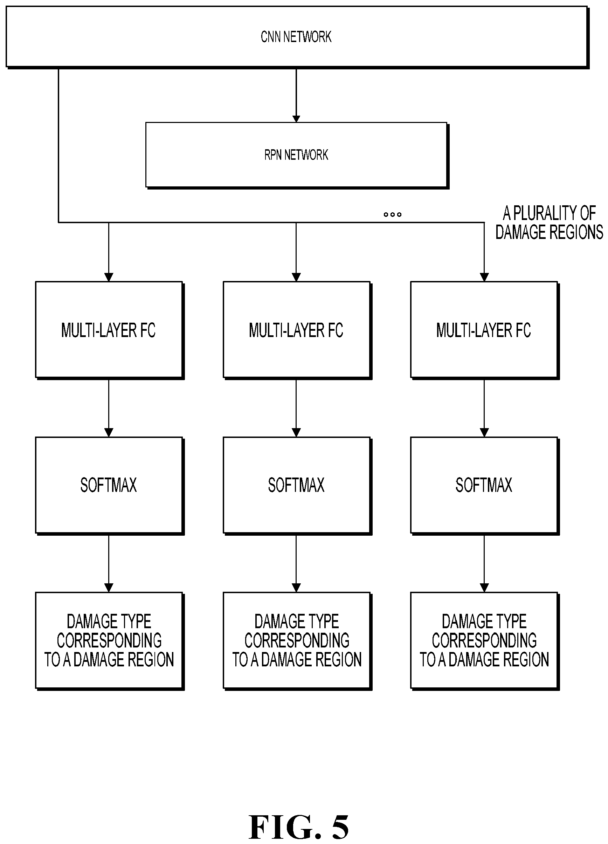

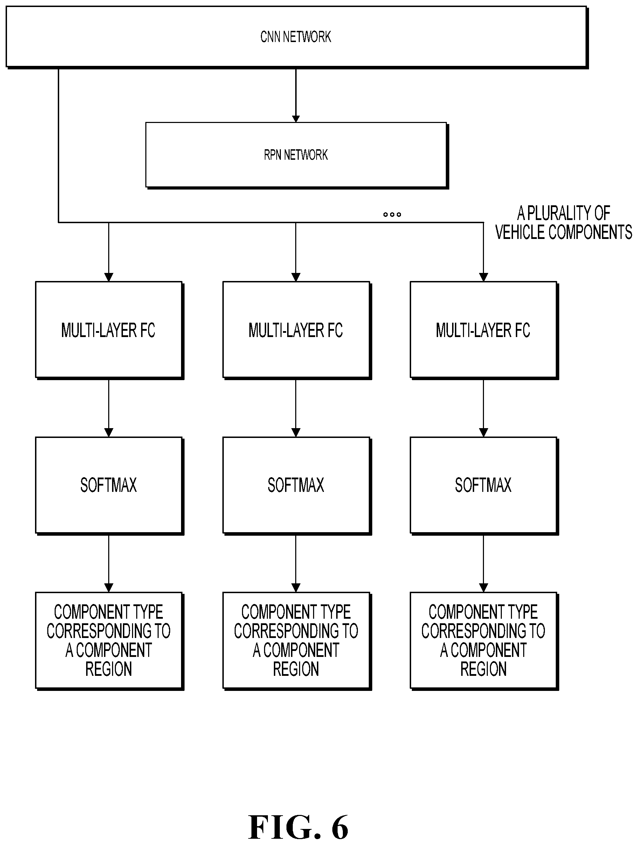

It should be noted that the process of examining the vehicle component by using the component identification model in S2 and processing of detecting the damaged part, the damage type, and the damage region by using the damage identification model in S4 can be performed in parallel. That is, the same algorithm server or corresponding algorithm servers can be used to process the to-be-processed picture and execute picture image processing and calculation in S2 and S4. Certainly, in the present application, it is also feasible to first execute the process of identifying the vehicle component in S2, or first execute the process of identifying the damaged part. As shown in FIG. 5 and FIG. 6, FIG. 5 is a schematic structural diagram illustrating a network architecture of a damage identification model, according to an implementation of the present application. FIG. 6 is a schematic diagram illustrating a network architecture of a component identification model, according to an implementation of the present application. In implementation process of an actual terminal APP, a network model architecture of the component identification model is basically the same as a network model architecture of the damage identification model. In the component identification model, the damage region in the damage identification model becomes the component region, and the damage type becomes the component type. Based on network model structures of the present application that are shown in FIG 5 and FIG 6, another improved, variant, or transformed network model can further be included. However, in another implementation of the present application, at least one of the component identification model or the damage identification model is a network model based on a convolution layer and a region proposal layer. An implementation of constructing the deep neural network after the training based on sample data shall fall within the implementation scope of the present application.

S5: Determine a damaged component in the to-be-processed picture according to the damaged part and the component region, and determine a damaged part and a damage type of the damaged component.

After obtaining the vehicle component information included in the to-be-processed images and information about a damaged part, a damage type, and a damage region in the to-be-processed images are obtained, a damaged component in the vehicle component is further identified and detected. In an implementation of this implementation, the component region and the damage region obtained by calculation through the foregoing identification process is further analyzed to position the damaged component. Specifically, the damaged component is determined based on a location region of the damage region and a location region of the component region that are in the to-be-processed images. For example, in an image P1, if a damage region identified in P1 is included in a component region identified in P1 (the area of an identified component region is generally larger than the area of a damage region), the vehicle component corresponding to the component region in PI can be considered as a damaged component. Alternatively, in an image P2, if there is an overlapping area between a damaged region identified in P2 and a component region identified in P2, the vehicle component corresponding to the component region in P2 is can be considered as a damaged component.

In a specific example, in an image P, vehicle components are identified as a left front door and a left front fender in S2, component regions of the two vehicle components respectively located in the image P at (r1, r2), corresponding to confidence levels (p1, p2). In S3, it is identified that there is a slight scrape (one of the damage types) in the image P, the damage region of the mild scratch in the picture P is r3, and the confidence level is p3. After processing the correspondence of the picture location region, the mild scratch region r3 is identified in the component region r1 of the front left door. Therefore, it is identified that the damaged component is the front left door, and the damage region of the damaged component is r3. The damage type of the damaged component in the single image P is a slight scrape, and a confidence level is p1*p3.

Certainly, if it is also identified that the left front fender is damaged, it can be determined, based on the foregoing example, that the damaged component in the image P further includes the left front fender, and a damaged part and a damage type of the front left fender can also be calculated.

During loss assessment processing, the to-be-processed image is the input to the disposed convolutional neural network. If there are a plurality of damaged parts, a plurality of image regions that include a damaged part are identified, the picture region is examined, the damage type of the picture region is determined, and the damaged part and the damage type corresponding to each picture region are separately output. Further, in this implementation, a damaged part corresponding to a damage with the highest damage degree in the damage type can be selected as the damaged part in the damaged component. Correspondingly, the damage type with the highest damage degree is determined as the damage type of the damaged component.

Based on the image-based vehicle loss assessment method provided in the present application, the damaged component included in the to-be-processed images is identified, and then a damaged part in the damaged component and a damage type corresponding to each damaged part are identified based on the constructed damage identification model. Therefore, vehicle loss assessment information of the vehicle component can be accurately, comprehensively, and reliably obtained. In an implementation solution of the present application, one or more damaged components in one or more images, one or more damaged parts in the damaged components, and one or more damage degrees, etc. are identified. In addition, for a local detail image of a similar vehicle component, a component type is also accurately determined. Reliability of information for vehicle loss assessment that is obtained through calculation is improved. A result of image-based vehicle loss assessment is more reliable and accuracy, improving the reliability of the result and user service experience.

Further, after the information for vehicle loss assessment is obtained, a loss assessment result that is to be fed back to the user can further be generated. Therefore, the method in the present application can further include:
S6: Generate a maintenance plan based on information that includes the damaged component, the damaged part, and the damage type.

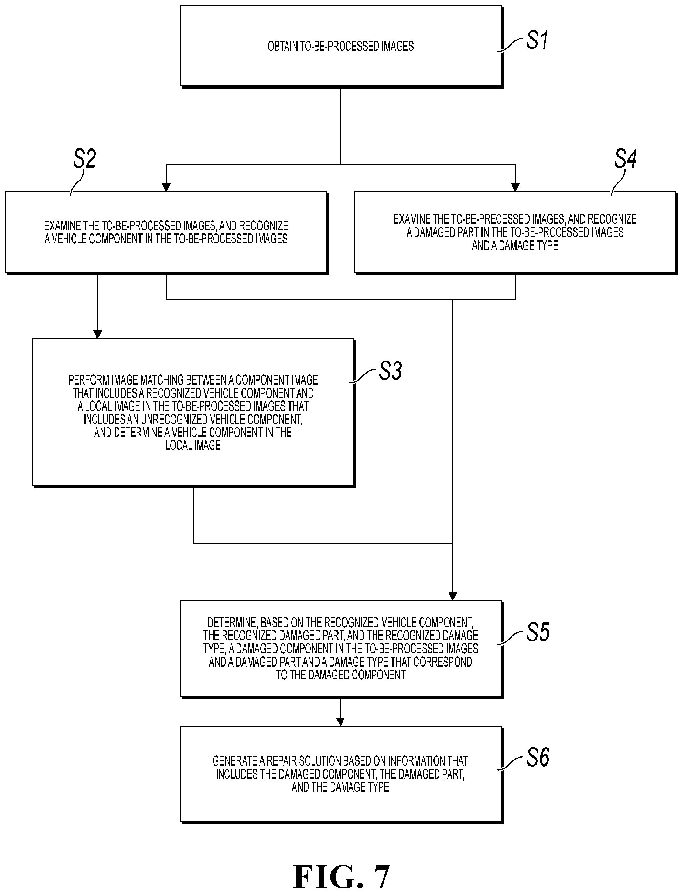

FIG 7 is a schematic diagram illustrating a method procedure in another implementation of an image-based vehicle loss assessment method, according to the present application. After information for vehicle loss assessment in this implementation is obtained by identifying a vehicle component in to-be-processed images, determining a damaged component, and identifying a damaged part and a damage type, a maintenance plan can be generated based on such information. In the maintenance plan, a loss assessment result can be specific for one damaged component, or can be specific for a plurality of damaged components of a whole vehicle. In an implementation solution of the present application, a vehicle maintenance plan is generated based on a damaged component, a damaged part in the damaged component, a damage type. Such a plan can provide insurance operating personnel and a vehicle owner with loss assessment information that is more accurate, more reliable, and with actual reference value. In the maintenance plan of the present application, one or more damaged components in one or more images, one or more damaged parts in the damaged components, a damage level, etc. can be identified to quickly obtain more comprehensive and accurate loss assessment information, and then automatically generate a maintenance plan, so as to meet a requirement of an insurance company or a vehicle owner for fast, comprehensive, accurate, and reliable vehicle loss assessment processing, improve accuracy and reliability of a vehicle loss assessment processing result, and improve user service experience.

In this implementation, each damage type can be set to correspond to one maintenance plan. For example, severe deformation corresponds to component replacement, minor deformation needs metal plating, and a slight scrape needs spray paint. For the user, a final output for a damaged component may be a maintenance plan. When there are a plurality of damaged parts in one damaged component, a maintenance solution for the part that is most severely damaged can be used as a final processing solution for the entire component. Generally, one component of a vehicle is considered as a whole. If a plurality of parts are damaged, it is relatively reasonable to apply the processing solution for the part that is most severely damaged. In this implementation, one maintenance plan can be selected to repair all damaged parts in a damaged component. For example, for a damaged component, a damage type of a damaged part is severe damage the damaged part requires component replacement; and a damage type of another damaged part is moderate deformation, and the damaged part requires metal plating. In this case, component replacement processing can be selected instead of metal plating processing.

It should be understood that, generally, the loss assessment can include two pieces of information: damage evaluation and cost assessment. In this implementation of the present application, if the output maintenance plan does not include information about maintenance costs, the maintenance plan can be classified into the loss assessment part.; if the output maintenance plan includes information about maintenance costs, it can be considered that calculation processing is performed for both loss assessment and price assessment. Therefore, each maintenance plan in this implementation is one of processing results of vehicle loss assessment.

In a specific example, after the algorithm server identifies the damaged component, the damaged part and the damage type of the damaged component in the to-be-processed picture, the algorithm server can generate the maintenance plan of the vehicle component based on the foregoing information according to a predetermined processing rule. For example, a left front fender of a B1 -model vehicle manufactured by a manufacturer A1 in 2016 is slightly deformed, and needs metal plating processing. A left front door of a B2-model vehicle manufactured by a manufacturer A2 in 2010 is severely scraped and severely deformed, and needs component replacement processing. A front bumper of a B3-model vehicle manufactured by a manufacturer A3 in 2013 is slightly scraped, and needs spray painting processing. A left front lamp needs disassembly for examination, etc.

In another implementation of the method in the present application, to meet a requirement of the user for costs information in vehicle loss assessment, the maintenance plan can further include information about estimated maintenance costs for vehicle component maintenance, so that the user can know maintenance costs information, and select a more suitable maintenance processing manner. Therefore, a user requirement is satisfied, and user experience is improved. Therefore, in another implementation of the method in the present application, the method can further include:
S601: Obtain information about a maintenance strategy of a vehicle component.

Correspondingly, the maintenance plan can further include estimated maintenance costs corresponding to the maintenance strategy. The estimated maintenance costs are estimated maintenance costs of the vehicle component and that are calculated based on the information including the damaged part in the vehicle component, the damage type, and maintenance strategy, and data including a product price corresponding to the vehicle component in the maintenance strategy and/or a maintenance service to the vehicle component in the maintenance strategy.

In a specific implementation, a calculation rule can be designed to invoke different price databases based on information about the maintenance strategy such as a vehicle model of the vehicle component, and a selected maintenance shop (whether an authorized dealership or a common general repair shop) for the vehicle component. The information about the maintenance strategy can be determined based on user's selection. For example, the user can select a maintenance place (for example, at a municipal level or a district level), select an authorized dealership or a general repair shop, and input a vehicle brand and a model. Then, the algorithm server can obtain the following maintenance plan based on the maintenance strategy information of the vehicle component, the identified damaged part and the identified damage type:

A front bumper of a B3-model vehicle manufactured by a manufacturer A3 in 2013 is slightly scraped, and needs paint spraying processing. Estimated maintenance costs in a local authorized dealership are 600 RMB.

Certainly, in another implementation, an engine module is established based on information such as working hours and costs of repair at the authorized dealership and information prepared by a conventional auto insurance company according to claims settlement experience, such as a damaged component, a damage type, and a damage degree. When an actual processing application identifies the damaged part and the damage type of the vehicle component, the engine module can be invoked to output a loss assessment result of the vehicle component.

The information about the maintenance strategy above can be modified and replaced. For example, the user can choose the authorized dealership for maintenance. In this case, the selection corresponds to a maintenance strategy and a maintenance plan. If the user changes to the general repair shop for maintenance, the selection corresponds to another maintenance strategy and another maintenance plan.

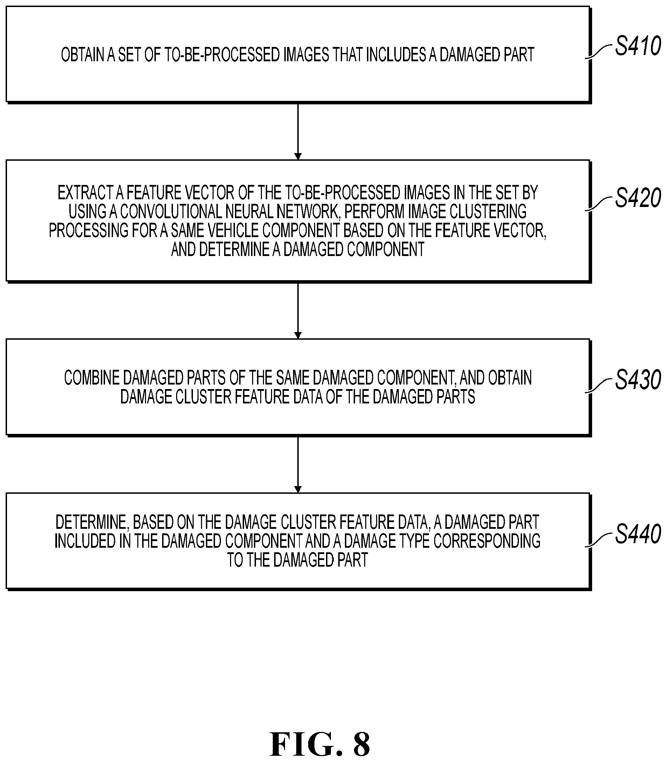

The present application further provides a specific implementation of a training process of a damage identification model based on samples. Specifically, in another implementation of the specific method, as shown in FIG. 8, the damaged component, the damaged part and the damage type of the damaged component can be determined in the following manners:
S410: Obtain a set of to-be-processed images that include a damaged part.
S420: Extract a feature vector of the to-be-processed images in the set by using a convolutional neural network, perform image clustering processing for the same vehicle component based on the feature vector, and determine a damaged component.
S430: Combine damaged parts belonging to the same damaged component, and obtain damage cluster feature data of the damaged parts.
S440: Determine, based on the damage cluster feature data, a damaged part included in the damaged component and a damage type corresponding to the damaged part.

In a specific example, any identified damaged component p corresponds to one or more damaged parts (including a damage type, a location, and a confidence level) identified in one or more images. The images are clustered, and an image distance is calculated by using a feature vector of the images that is extracted by using a convolutional network, for example, by using a last output vector of the damage sample image that is input into a model for training in a convolutional network in Ns. Damaged parts (top K damaged parts are selected based on a confidence level, and K can be 15) in images belong to the same cluster t are combined, and used as a feature Ft. Further, features (Ft1, Ft2, ...) of top-C (C can be 5, the features are ranked based on a quantity of weighted damaged parts in the cluster, and a weighted value is a confidence level of a damaged part) in the cluster are selected as features input to a multi-classification gradient boosting decision tree GBDT. The multiclass gradient boosting decision tree (GBDT) model is used to finally output a damage type and a damage degree. The GBDT model can be obtained through gradient descent training by using marking data.

It can be understood that a damage image can be a sample image that is used during model training. In actual practice of a user, the damage image can be the to-be-processed image. The foregoing image cluster is mainly clustering images that include the same component. A purpose of clustering is to identify a photographed image that has a part approximately the same as the damaged part in damaged component. The obtained damaged component in the to-be-processed images, the corresponding damaged part, and the corresponding damage type are determined in the foregoing implementation based on the damaged components, the damaged parts, and the damage types obtained in S2 and S3.

Further, in another implementation, the combining damaged parts belonging to the same damaged component can include: selecting and combining damaged parts in K to-be-processed images in descending order of confidence levels from to-be-processed images that belong to the same damage component in an image cluster, where K≥2.

After the combination, TOP K confidence levels are selected for processing. Especially, a speed of identification processing can be improved during training based on a large quantity of sample images. In an implementation scenario of model training in this implementation, K can be from 10 to 15.

In another implementation, the damage cluster feature data of the damaged parts can include: selecting, from the combined image cluster, damage clustering feature data of C to-be-processed images in descending order of weighted values of damaged parts, where C≥2, and a weight factor of the weighted value is a confidence level of a damaged part. In an implementation scenario of model training in this implementation, C can be from 3 to 5.

In some other implementations, the determining, according to the damage clustering feature data, the damaged part included in the damaged component and the damage type corresponding to the damaged part includes: identifying the damaged part and the damage type by using the damage clustering feature data as input data for a predetermined multi-classification gradient boosting decision tree model.

It can be understood that the to-be-processed image for processing can be a sample image that is used during model training. For example, in the obtained set of training sample pictures that include a damaged part in S410, or in training sample pictures that belong to the same damaged component in the image cluster, the damaged parts in the K training sample pictures are selected in descending order of the confidence levels, and then combined. For an implementation process of the model training, refer to the descriptions of the to-be-processed images. Details are not described herein again.

In the foregoing implementation solution, a processing speed can be further accelerated while reliability and accuracy of a loss assessment result are improved.

Images are generated by drawing a three-dimensional model of a vehicle from a plurality of angles and in a plurality of illumination models with a sense of reality. The images generated by drawing is added to the training data and marking data. In an implementation, a training sample image used for at least one of a component identification model or a damage identification model can include: image information obtained by drawing of the damaged vehicle component generated by computer simulation. An image photographed in an actual site is marked for training, so that a model training effect can be further improved, a model parameter can be optimized, and identification precision can be improved.

According to the image-based vehicle loss assessment method provided in the present application, the damaged component contained in the to-be-processed images can be identified, and then a plurality of damaged parts in the damaged component and a damage type corresponding to each damaged part can be identified based on the constructed damage identification model. Therefore, vehicle loss assessment of the vehicle component can be accurately, comprehensively, and reliably obtained. Further, in an implementation solution of the present application, a vehicle maintenance plan is generated based on the damaged component, the damaged part in the damaged component, the damage type, information about a maintenance plan, so as to provide insurance operating personnel and the maintenance strategy, to provide more accurate and reliable loss assessment information with practical reference value for insurance claim operator and a vehicle owner user. In the implementation solution of the present application, one or more damaged components in one or more images, one or more damaged parts in the damaged components, one or more damage degrees, etc. can be identified to quickly obtain more comprehensive and accurate loss assessment information. Then, the maintenance plan can be automatically generated, to meet a requirement of an insurance company or a vehicle owner for fast, comprehensive, accurate, and reliable vehicle loss assessment processing, improve the accuracy and the reliability of a vehicle loss assessment processing result, and improve user service experience.

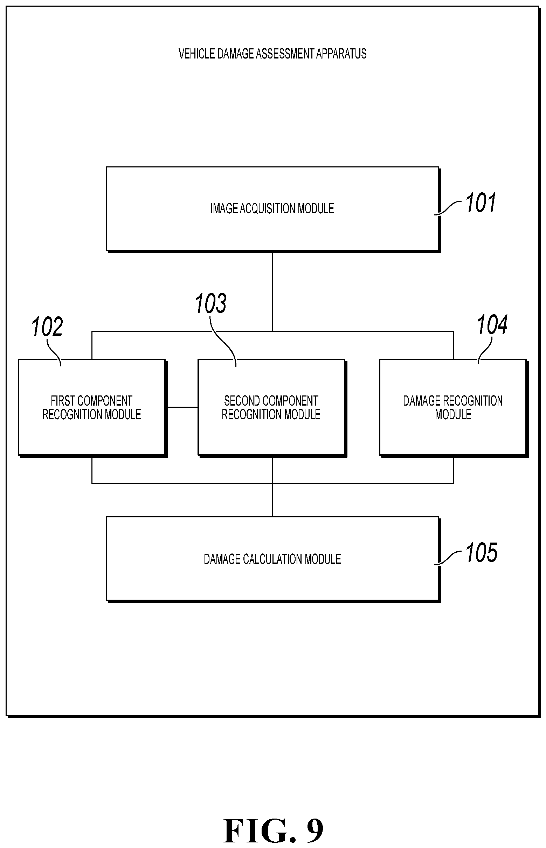

Based on the foregoing image-based vehicle loss assessment method, the present invention further provides an image-based vehicle loss assessment apparatus. The apparatus can be an apparatus that uses a system (including a distributed system), software (application), a module, a component, a server, a client, etc., using the method in the present application and that includes necessary implementation hardware. Based on the same innovative concept, an apparatus provided in an implementation of the present application is described in the following implementation. An implementation solution of resolving a problem by the apparatus is similar to the implementation solution of the method. Therefore, for a specific implementation of the apparatus of the present application, refer to the implementation of the foregoing method. Repeated descriptions are not further provided. In the following, the term "unit" or "module" can implement a combination of software and/or hardware of a predetermined function. Although the apparatus described in the following implementation is preferably implemented by software, it is also possible to implement the apparatus through hardware or a combination of software and hardware. Specifically, FIG 9 is a schematic diagram illustrating a module structure of an image-based vehicle loss assessment apparatus, according to an implementation of the present application. As shown in FIG. 9, the apparatus can include: an image acquiring module 101, configured to acquire to-be-processed images; a first component identification module 102, configured to examine the to-be-processed images, and identify a vehicle component in the to-be-processed images; a second component identification module 103, configured to perform image matching between a component image that includes an identified vehicle component and the local image in the to-be-processed images that includes an unidentified vehicle component, and determine a vehicle component in the local image; a damage identification module 104, configured to examine the to-be-processed images, and identify a damaged part and a damage type in the to-be-processed images; and a damage calculation module 105, configured to determine, based on the identified vehicle component, the identified damaged part, and the identified damage type, a damaged component in the to-be-processed images, and a damaged part and a damage type that correspond to the damaged component.

According to the image-based vehicle loss assessment apparatus provided in the present application, the damaged component contained in the to-be-processed images can be identified, and then a damaged part in the damaged component and a damage type corresponding to each damaged part can be identified based on the constructed damage identification model Therefore, vehicle loss assessment information of the vehicle component can be accurately, comprehensively, and reliably obtained. In the implementation solution of the present application, one or more damaged components in one or more images, one or more damaged parts in the damaged components, one or more damage degrees, etc. can be identified. In addition, for a local detail image of a similar vehicle component, a component type can also be accurately determined, improving reliability of information about vehicle loss assessment that is obtained by calculation. A result of image-based vehicle loss assessment is more reliable, to improve the accuracy and the reliability of the result of the vehicle loss assessment and improve user service experience.

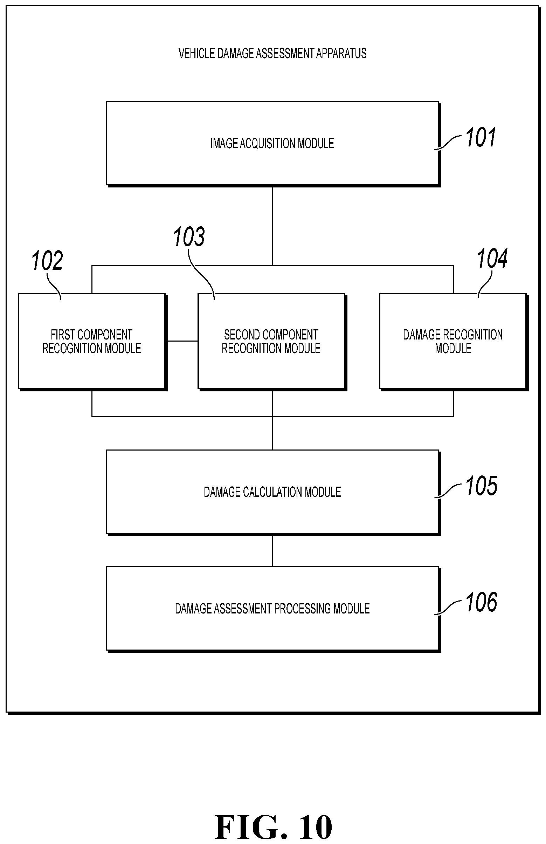

FIG. 10 is a schematic diagram illustrating a module structure in another implementation of an image-based vehicle loss assessment apparatus, according to the present application. As shown in FIG. 10, in another implementation, the apparatus can further include: a loss assessment processing module 105, which is configured to generate a maintenance plan based on information that includes the determined damaged component in the to-be-processed images and the determined damaged part and damage type that correspond to the damaged component.

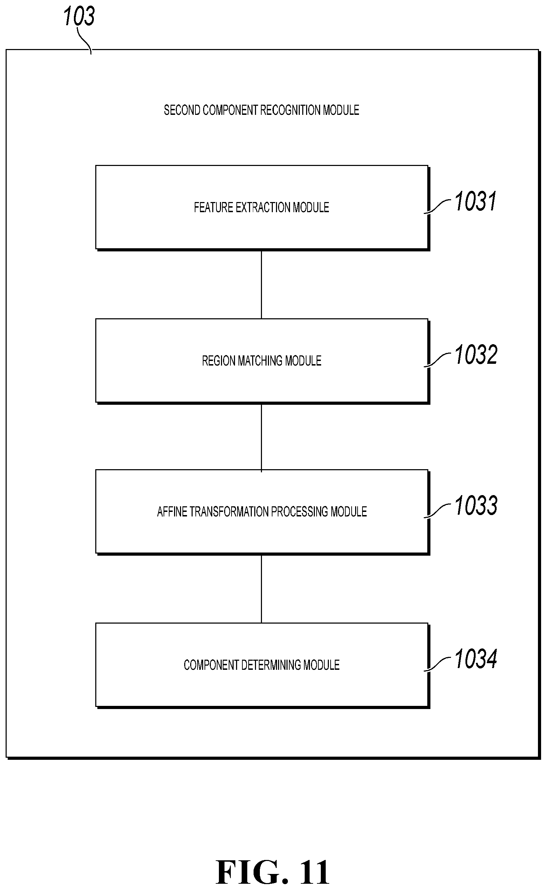

FIG. 11 is a schematic diagram illustrating a module structure in an implementation of the second component identification module 103, according to the present application. As shown in FIG 11, the second component identification module can include: a feature extraction module 1031, which is configured to: extract first convolutional feature data of the local image by using a convolutional neural network, and extract a first local feature point set of the local image by using a predetermined algorithm; a region matching module 1032, which is configured to compare the first convolutional feature data with convolutional feature data of a sampling region in the component image, and obtain a similar region whose convolutional feature data is the most similar to the first convolutional feature data; an affine transformation processing module 1033, which is configured to: extract a second local feature point set of the similar region by using the predetermined algorithm, match the first local feature point set and the second local feature point set to obtain a matching point pair, and obtain affine transformation between the local image and the component image by minimizing a location error of the matching point pair during affine transformation; and a component determining module 1034, which is configured to select, as the vehicle component in the local image, a component that is in the component image and that corresponds to an image region that has a smallest location error.

For the component image, second convolutional feature data of a sliding window region in the component image can be extracted by using a sliding window, and a second convolutional feature data set can be obtained from such data, where the second convolutional feature data is obtained by using the same convolutional neural network as the one used for extracting the first convolutional feature data; and the similar region whose convolutional feature data is the most similar to the first convolutional feature data is selected from the second convolutional feature data set, where similarity is calculated by using cosine similarity.

With reference to the forgoing method, the apparatus can further include another implementation. For example, the to-be-processed images are examined by using a deep neural network constructed and generated through sample data training based on network models that is included of a convolution layer and a region proposal layer. From the to-be-processed images that are in an image cluster and belong to the same damage sample component, damaged parts in K to-be-processed images are selected. Those images are selected in descending order of confidence degrees and the selected images are further combined. An image region range of the similar region is expanded in a predetermined manner, etc In addition, information about a maintenance strategy of the vehicle component can also be obtained to generate a maintenance plan that includes an estimated repair cost, etc. For details, refer to related descriptions of the foregoing method implementation, and the details are not enumerated here.

The foregoing method or apparatus of the present application can be implemented by using a computer program with reference to necessary hardware, can be disposed in an application of a device, and can quickly and reliably output a result of image-based vehicle loss assessment. Therefore, the present application further provides an image-based vehicle loss assessment apparatus, and the apparatus can be on a server side, and can include a processor, and a memory that is configured to store a processor-executable instruction. When executing the instruction, the processor implements the following operations: obtaining to-be-processed images; examining the to-be-processed images, and identifying a vehicle component in the to-be-processed images; performing image matching between a component image that includes an identified vehicle component and the local image in the to-be-processed images that includes an unidentified vehicle component, and determining a vehicle component in the local image; examining the to-be-processed images, and identifying a damaged part and a damage type in the to-be-processed images; and determining, based on the identified vehicle component, the identified damaged part, and the identified damage type, a damaged component in the to-be-processed images, and a damaged part and a damage type that correspond to the damaged component.

In specific actual processing, the apparatus can further include other processing hardware, for example, a GPU (Graphics Processing Unit, graphics processing unit). As described in the forgoing method, in another implementation of the apparatus, when executing the instruction, the processor further implements the following step: generating a maintenance plan based on information that includes the determined damaged component in the to-be-processed images and the determined damaged part and damage type that correspond to the damaged component.

In another implementation of the image-based vehicle loss assessment apparatus, when executing the instruction of performing image matching between a component image that includes an identified vehicle component and the local image in the to-be-processed images that includes an unidentified vehicle component, and determining a vehicle component in the local image, the processor implements the following step: extracting first convolutional feature data of the local image by using a convolutional neural network, and extracting a first local feature point set of the local image by using a predetermined algorithm; comparing the first convolutional feature data with convolutional feature data of a sampling region in the component image, and obtaining a similar region whose convolutional feature data is the most similar to the first convolutional feature data; extracting a second local feature point set of the similar region by using the predetermined algorithm, matching the first local feature point set and the second local feature point set, to obtain a matching point pair, and obtaining affine transformation between the local image and the component image by minimizing a location error of the matching point pair during affine transformation; and selecting, as the vehicle component in the local image, a component that is in the component image and that corresponds to an image region that has a smallest location error.

In another implementation of the apparatus, the present solution can be further optimized, to improve processing precision. Specifically, when executing the instruction of performing image matching between a component image that includes an identified vehicle component and the local image in the to-be-processed images that includes an unidentified vehicle component, and determining a vehicle component in the local image, the processor implements at least one of the following steps: for the component image, extracting second convolutional feature data of a sliding window region in the component image by using a sliding window, and obtaining a second convolutional feature data set, where the second convolutional feature data is obtained by using the same convolutional neural network as the one used for extracting the first convolutional feature data; and selecting, from the second convolutional feature data set, the similar region whose convolutional feature data is the most similar to the first convolutional feature data, where similarity is calculated by using cosine similarity; or expanding an image region range of the similar region by a predetermined percentage, where a value range of the predetermined percentage includes 50%, and correspondingly, the second local feature point set includes an extracted local feature point set of the similar region whose image region range is expanded; or extracting first local feature data and second local feature data by using scale-invariant feature transform.

In another implementation of the image-based vehicle loss assessment apparatus, the to-be-processed images can be examined by using the following identification model: a deep neural network constructed and generated through sample data training based on network models that includes a convolution layer and a region proposal layer.

As described in the foregoing manner, the damaged component in the to-be-processed images and the damaged part and the damage type that correspond to the damaged component can be determined by using the following manners: obtaining a set of to-be-processed images that include a damaged part; extracting a feature vector of the to-be-processed images in the set by using a convolutional neural network, performing image clustering processing for a same vehicle component based on the feature vector, and determining the damaged component; combining damaged parts belonging to the same damaged component, and obtaining damage clustering feature data of the damaged parts; and determining, based on the damage clustering feature data, the damaged part included in the damaged component and a damage type corresponding to the damaged part.

With reference to the foregoing method, the apparatus can further include another implementation. For a specific implementation and an implementation process of the method, refer to descriptions of related implementations of the foregoing method. Details are not described herein again.

By using the image-based vehicle loss assessment apparatus provided in the implementation of the present application, the damaged component included in the to-be-processed images can be identified, and then a plurality of damaged parts in the damaged component and a damage type corresponding to each damaged part can be identified based on the constructed damage identification model. Therefore, vehicle loss assessment information of the vehicle component can be accurately, comprehensively, and reliably obtained. Further, in an implementation solution of the present application, a vehicle maintenance plan is generated based on the information including the damaged component, the damaged part in the damaged component, the damage type, information about a maintenance plan, so as to provide insurance operating personnel and the maintenance strategy, to provide more accurate, and reliable loss assessment information with practical reference value for insurance claim operator and a vehicle owner user. In the implementation solution of the present application, one or more damaged components in one or more images, one or more damaged parts in the damaged components, one or more damage degrees, etc. can be identified to quickly obtain more comprehensive and accurate loss assessment information. Then, the maintenance plan can be automatically generated, to meet a requirement of an insurance company or a vehicle owner for fast, comprehensive, accurate, and reliable vehicle loss assessment processing, improve accuracy and reliability of a vehicle loss assessment processing result, and improve user service experience.

The method or apparatus in the foregoing implementations of the present application can implement service logic and record the service logic on a storage medium by using a computer program. The storage medium can be read and executed by a computer, to achieve the effect of the present solution described in the implementations of the present application. Therefore, the present application further provides a computer readable storage medium. The computer readable storage medium stores a computer instruction. When the instruction is executed, the following steps can be implemented: obtaining to-be-processed images; examining the to-be-processed images, and identifying a vehicle component in the to-be-processed images; determining a vehicle component in the local image from the to-be-processed image, by performing image matching between a component image that includes an identified vehicle component and the local image that includes an unidentified vehicle component; examining the to-be-processed images, and identifying a damaged part and a damage type in the to-be-processed images; and determining, based on the identified vehicle component, the identified damaged part, and the identified damage type, a damaged component in the to-be-processed images and a damaged part and a damage type that correspond to the damaged component.

The computer readable storage medium can include a physical apparatus for storing information. Generally, the information is digitized and then stored in a medium in an electric manner, a magnetism manner, an optic manner, etc. The computer readable storage medium in this implementation can include: an apparatus that stores information in an electric manner, for example, a memory such as a RAM or a ROM; an apparatus that stores information in a magnetism manner, such as a hard disk, a floppy disk, a magnetic tape, a magnetic core memory, a magnetic bubble memory, or a USB flash drive; and an apparatus that stores information in an optic manner, such as a CD or a DVD. Certainly, there are also other forms of computer readable storage media, for example, a quantum memory and a graphene memory.

The foregoing apparatus or method can be applied to an electric device for image processing, to implement fast processing of image-based vehicle loss assessment processing. The electronic device can be a standalone server, or can be a system cluster including a plurality of application servers, or can be a server in a distributed system.

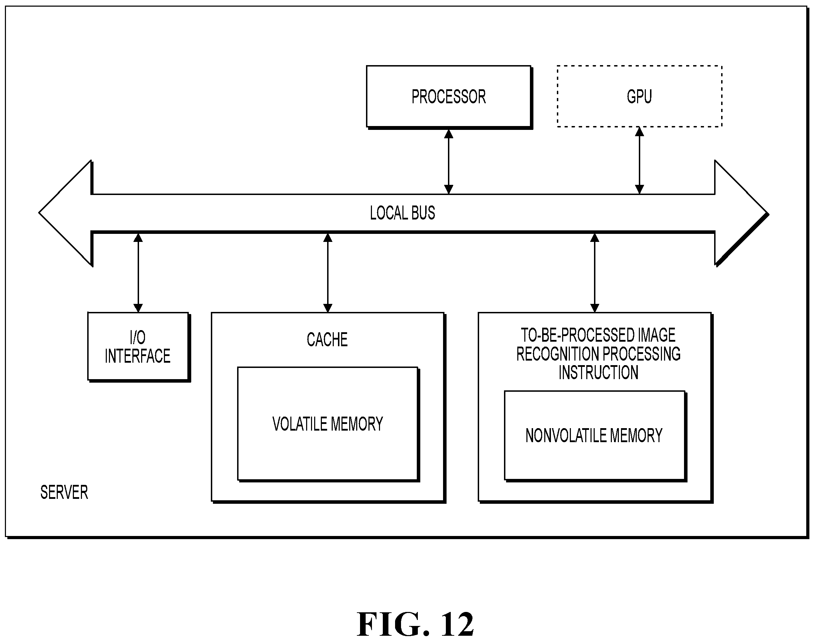

FIG. 12 is a schematic structural diagram illustrating an implementation of an electronic device, according to the present invention. In an implementation, the electronic device can include a processor and a memory configured to store a processor executable instruction. when executing the instruction, the processor implements: obtaining to-be-processed images; examining the to-be-processed images, and identifying a vehicle component in the to-be-processed images; determining a vehicle component in the local image from the to-be-processed images, by performing image matching between a component image that includes an identified vehicle component and the local image that includes an unidentified vehicle component; examining the to-be-processed images, and identifying a damaged part and a damage type in the to-be-processed images; and determining, based on the identified vehicle component, the identified damaged part, and the identified damage type, a damaged component in the to-be-processed images and a damaged part and a damage type that correspond to the damaged component.

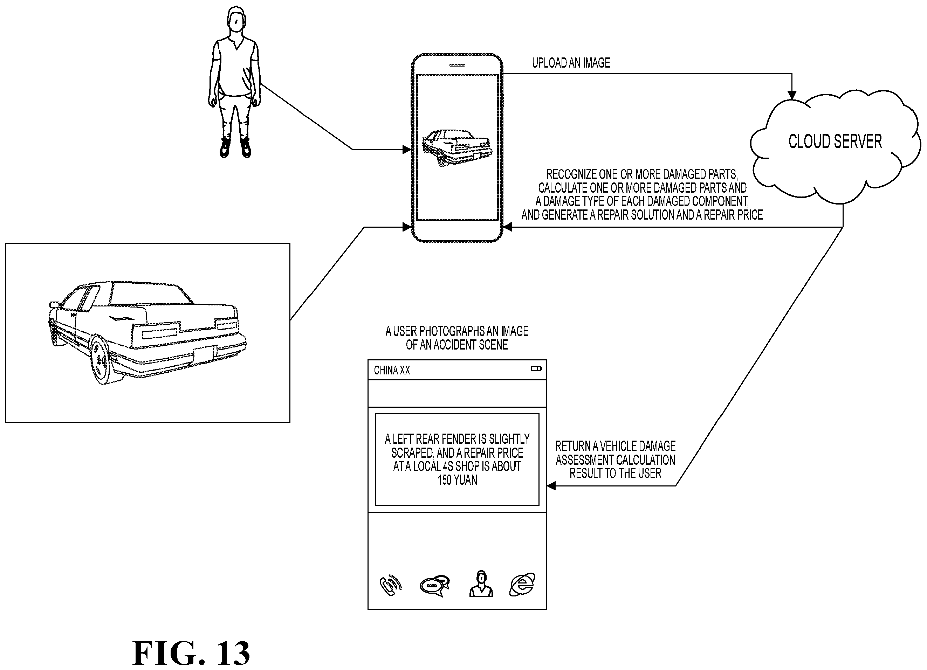

FIG. 13 is a schematic diagram illustrating a processing scenario of vehicle loss assessment, according to an implementation of the present application. A client in FIG. 13 is a mobile terminal of a user. The client in another implementation scenario can also be a PC or another terminal device. Based on the image-based vehicle loss assessment method and apparatus, and the electronic device provided in the present application, a damaged part and a damage type are identified by using a deep learning technology, and the damaged part is precisely located by using an image matching method. Therefore, accuracy of loss assessment can be improved based on a result of multi-image recognition. A maintenance plan and an estimated cost are automatically generated based on an image recognition technology, a vehicle component price database, and a maintenance rule. In some implementation solutions of the present application, the maintenance plan and the estimated maintenance costs can be automatically generated based on more specific vehicle damage information, the vehicle component price database, maintenance processing manner, etc. Therefore, a requirement of an insurance company or a vehicle owner for fast, comprehensive, accurate, and reliable vehicle loss assessment processing can be satisfied, thereby improving accuracy and reliability of a result of vehicle loss assessment, and improving user service experience.

The foregoing method and apparatus can be applied to a plurality of automatic image-based vehicle loss assessment service system, so that the user can quickly obtain accurate and reliable vehicle lost assessment information by uploading a photographed damage vehicle image. Therefore, a requirement of the user is satisfied, and service use experience of the user is improved. Therefore, the present application further provides an image-based vehicle loss assessment system. Specifically, the system can include an I/O interface, a memory, a central processing unit, and an image processor, where the I/O interface is configured to: obtain to-be-processed images and output a maintenance plan; the central processing unit is coupled to the image processor, and is configured to: examine the to-be-processed images, and identify a vehicle component in the to-be-processed images; perform image matching between a component image that includes an identified vehicle component and the local image in the to-be-processed images that includes an unidentified vehicle component, and determine a vehicle component in the local image; examine the to-be-processed images, and identify a damaged part and a damage type in the to-be-processed images; and determine, based on the identified vehicle component, the identified damaged part, and the identified damage type, a damaged component in the to-be-processed images and a damaged part and a damage type that correspond to the damaged component; and the central processing unit is further configured to generate a maintenance plan based on information that includes the determined damaged component in the to-be-processed images and the determined damaged part and damage type that correspond to the damaged component.

The content of the present application mentions descriptions of image quality processing, a convolutional neural network, a region proposal network, a deep neutral network that is generated by combining the convolutional neural network and the region proposal network, a calculation manner of an estimated maintenance costs, a processing manner of acquiring a damaged part and a damaged type through a GBDT model, extracting of local feature data through SIFT, data acquisition, exchange, calculation, and determining in an affine transformation processing process. However, the present application is not limited to conforming to the cases that must comply with an industry communications standard, a standard data model/algorithm, a computer processing and storage rule, or situations described in the implementations of the present invention. Some industry standards, a self-defined manner, or an implementation solutions obtained after modification based on an implementation described in the implementations can also implement the same, equivalent, similar, or expectable implementation effects of a variant as the foregoing implementations. The implementations of a data acquiring manner, a storage manner, a manner of determining, a processing manner, etc. in modifications or variations can still fall within the scope of the optional implementation solutions of the present application.

In the 1990s, improvement of a technology can be clearly distinguished between hardware improvement (for example, improvement of circuit structures such as a diode, a transistor, and a switch) and software improvement (improvement of a method procedure). However, with development of the technology, nowadays improvement of many method procedures can be considered as a direct improvement of a hardware circuit structure. Designers obtain a corresponding hardware circuit structure almost all by programming an improved method procedure to a hardware circuit. Therefore, it cannot be said that an improvement of a method procedure cannot be implemented by using a hardware entity module. For example, a programmable logic device (Programmable Logic Device, PLD) (for example, a field programmable gate array (Field Programmable Gate Array, FPGA)) is such an integrated circuit. A logical function of the programmable logic device is determined by component programming executed by a user. The designers independently perform programming to "integrate" a digital system into a single PLD without requiring a chip manufacturer to design and produce a dedicated integrated circuit. In addition, instead of manually producing an integrated circuit chip, the programming is mostly implemented by "logic compiler (logic compiler)" software, which is similar to a software compiler used during program development. Original code that exists before compiling also needs to be written in a specific programming language, which is referred to as a hardware description language (Hardware Description Language, HDL). There are more than one types of HDLs, such as an ABEL (Advanced Boolean Expression Language), an AHDL (Altera Hardware Description Language), Confluence, a CUPL (Cornell University Programming Language), HDCal, a JHDL (Java Hardware Description Language), Lava, Lola, MyHDL, PALASM, RHDL (Ruby Hardware Description Language), etc. Currently, VHDL (Very-High-Speed Integrated Circuit Hardware Description Language) and Verilog are most commonly used. A person skilled in the art should also be understood that a hardware circuit that implements a logical method procedure can be easily obtained provided that the method procedure is locally programmed by using several foregoing hardware description languages.

A controller can be implemented by using any proper manner. For example, the controller can be a microprocessor or a processor, a computer readable medium that stores computer readable program code (for example, software or firmware) that is executed by the (micro) processor, a logic gate, a switch, an application-specific integrated circuit (Application-Specific Integrated Circuit, ASIC), a programmable logic controller, or an embedded microcontroller. Examples of the controller can include, but are not limited to the following microcontrollers: ARC 625D, Atmel AT91SAM, Microchip PIC18F26K20, and Silicone Labs C8051F320. A memory controller can also be implemented as a part of controlling logic of the memory. A person skilled in the art also knows that that a controller can be implemented in a manner of pure computer readable program code, and the steps in the method can be logically programmed to enable the controller to further implement same functions in forms of a logical gate, a switch, an application-specific integrated circuit, a programmable logic controller, an embedded microcontroller, etc. Therefore, the controller can also be considered as a structure in the hardware component. Alternatively, an apparatus configured to implement various functions can also be considered as both a software module for implementing the method and a structure in a hardware component.

The system, the apparatus, the module, or the unit described in the foregoing implementations can be specifically implemented by a computer chip or an entity, or can be implemented by a product with a specific function. A typical implementation device is a computer. Specifically, the computer can be, for example, a personal computer, a laptop computer, an in-vehicle man-machine interaction device, a cellular phone, a camera phone, a personal digital assistant, a media player, a navigation device, an email device, a game console, a tablet computer, a wearable device, or a combination of any of these devices.

For ease of description, the foregoing apparatus is described by dividing the functions into various modules. Certainly, when the present application is implemented, a function of each module can be implemented in one or more pieces of software and/or hardware, or a module that implements the same function can be implemented as a combination of a plurality of submodules or subunits, etc. The described apparatus implementation is merely exemplary. For example, the unit division is merely logical function division and can be other division in actual implementation. For example, a plurality of units or components can be combined or integrated into another system, or some features can be ignored or not performed. In addition, the displayed or discussed mutual couplings or direct couplings or communication connections can be implemented by using some interfaces. The indirect couplings or communication connections between the apparatuses or units can be implemented in electronic, mechanical, or other forms.

A person skilled in the art also knows that a controller can be implemented in a manner of pure computer readable program code, and the steps in the method can be logically programmed to enable the controller to further implement same functions in forms of a logical gate, a switch, an application-specific integrated circuit, a programmable logic controller, an embedded microcontroller, etc. Therefore, the controller can be considered as a hardware component, and an apparatus that is included in the controller and that is configured to implement various functions can also be considered as a structure in the hardware component. Alternatively, an apparatus configured to implement various functions can be considered as both a software module for implementing the method and a structure inside the hardware component.

The present invention is described with reference to the flowcharts and/or block diagrams of the method, the device (system), and the computer program product based on the implementations of the present invention. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions can also be stored in a computer readable memory that can instruct the computer or any other programmable data processing device to work in a specific manner, so that the instructions stored in the computer readable memory can generate an artifact that includes an instruction apparatus. The instruction apparatus implements a specific function in one or more procedures in the flowcharts and/or in one or more blocks in the block diagrams.

These computer program instructions can be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In typical configuration, a computing device includes one or more processors (CPU), an input/output interface, a network interface, and a memory.

The memory can include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can implement information storage by using any method or technology. Information can be a computer readable instruction, a data structure, a program module, or other data. An example of a computer storage medium includes but is not limited to a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or other optical storage, a cassette magnetic tape, tape and disk storage or another magnetic storage device or any other non-transmission media that can be configured to store information that can be accessed by a computing device. Based on a limitation in this specification, the computer readable medium does not include transitory computer readable medium (transitory media), such as a modulated data signal and a carrier.

A person skilled in the art should understand that the implementations of the present application can be provided as a method, a system, or a computer program product. Therefore, the present application can use a form of hardware only implementations, software only implementations, or implementations with a combination of software and hardware. Moreover, the present application can use a form of a computer program product that is implemented on one or more computer-usable storage media (including but not limited to a disk memory, a CD-ROM, an optical memory, etc.) that include computer usable program code.

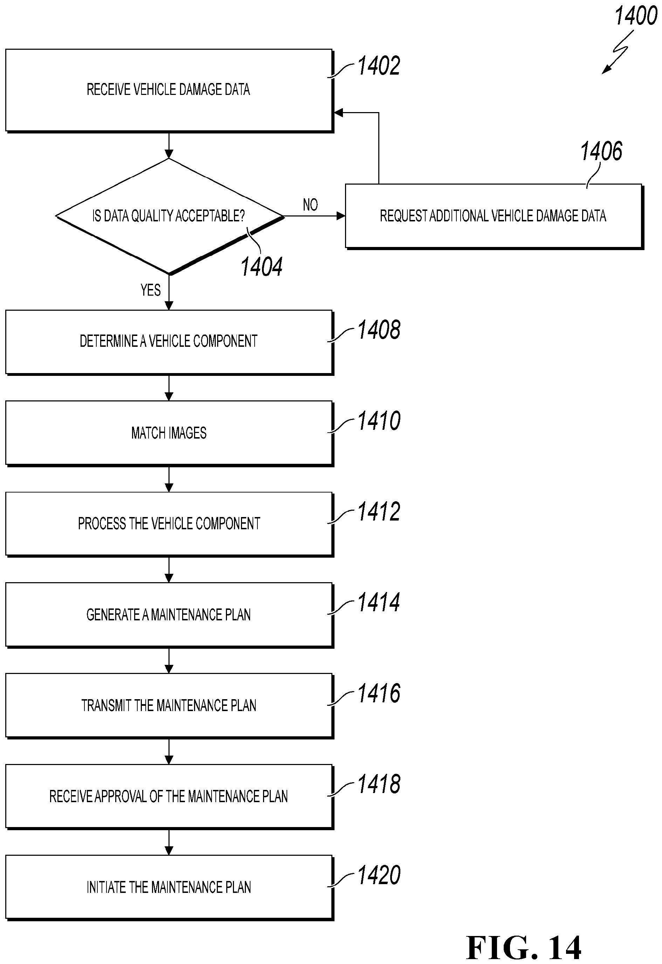

The present application can be described in the general context of computer executable instructions executed by a computer, for example, a program module. Generally, the program module includes a routine, a program, an object, a component, a data structure, etc. for executing a particular task or implementing a particular abstract data type. The present application can also be practiced in a distributed computing environment in which tasks are performed by a remote processing device that is connected by using a communications network. In the distributed computing environment, the program module can be located in both local and remote computer storage media including a storage device. FIG 14 is a flowchart illustrating an example of a computer-implemented method 1400 for generating vehicle loss assessment, according to an implementation of the present disclosure. For clarity of presentation, the description that follows generally describes method 1400 in the context of the other figures in this description. However, it will be understood that method 1400 can be performed, for example, by any system, environment, software, and hardware, or a combination of systems, environments, software, and hardware, as appropriate. In some implementations, various steps of method 1400 can be run in parallel, in combination, in loops, or in any order.

At 1402, vehicle damage data is received. The vehicle can include any type of private or public vehicle, such as a car, a truck, a boat, a train, a helicopter, and/or an airplane. In some implementations, the vehicle damage data is received from a user, such as a vehicle operator or a vehicle owner. The vehicle operator can take one or more images (or images) of the damaged location of the vehicle by using a mobile device (such as a mobile phone) at an accident scene involving the damaged vehicle to receive information about loss or the damage assessment status. The vehicle operator can directly upload the images or transmit the images to the vehicle owner to upload them. For example, the user can access an application configured to support vehicle maintenance to upload the acquired images. The application can be configured to automatically process the images to minimize the amount of transmitted data to minimize bandwidth requirements. The image processing can include filtering the images to delete features (e.g., background features) that are irrelevant for damage identification. The image processing can include conversion to gray scale images to minimize transmission bandwidth requirements. The image processing can include compression to a predetermined file size to minimize transmission bandwidth requirements. In addition to the images, the user can provide a user identifier (e.g., name and a password) and data associated to the uploaded images. The data can include indication of the damaged vehicle component (e.g., a front bumper, a left front door, or a taillight of the vehicle), the vehicle owner, insurance information, insurance information of other parties associated to the damaged vehicle, accident conditions, location, and time of accident. From 1402, method 1400 proceeds to 1404.

At 1404, vehicle damage data is processed to determine whether the data quality is acceptable and sufficient. The image quality may be determined based on a quality determination algorithm, such as a fuzzy degree threshold or an information entropy value. A poor image quality can prevent extraction of relevant information for vehicle loss assessment. If the vehicle damage data is below a quality threshold or portions of the vehicle damage data are missing, from 1404, method 1400 proceeds to 1406.

At 1406, additional vehicle damage data are requested from the user. For example, the user can be instructed to provide additional images that conform to particular standards that enable image processing. In some implementations, the user can be instructed to provide additional data associated to the uploaded images. From 1406, method 1400 returns to 1402. If the vehicle damage data is above the quality threshold, from 1404, method 1400 proceeds to 1408.

At 1408, the received vehicle damage data is used to retrieve user information based on the user identifier and is processed with the vehicle images to determine a vehicle component. In some implementations, if the vehicle images include a plurality of types of image information, the vehicle images are classified by using an image classification algorithm. For example, classification can be performed by using the image classification algorithm to identify an image for vehicle loss assessment processing that is useful for identifying a damaged part and a damage type. Specific classification of the vehicle images can be classified and set based on a scenario-processing requirement. The images can be classified into an image of a panoramic view of the entire vehicle, an image of a half view that contains a plurality of components, and an image of vehicle component details, etc. Images that are not related to the identification of a vehicle component or a damaged part in vehicle loss assessment processing can be separately classified or can be classified into a corresponding category (for example, an identification photo, a photo of a signal light at an accident spot, a portrait of the driver, etc.). The image classification algorithm can use a convolutional neural network (CNN) model, such as a ResNet (Residual Network, residual network), which is trained by using classified images.

The vehicle component is determined from the vehicle images using a component damage identification algorithm. The component identification model used to identify a vehicle component in an image can include a machine-learning algorithm. The component identification model is trained on sample images to identify the vehicle components contained in the component image.

Multiple component identification models can be used to determine the vehicle component. The output of each component identification model can include the vehicle component characterization and a confidence level. The component identification models can include a network model of a deep neural network, a variant network model, a convolutional neural network (CNN) model, a region proposal network (RPN) model or a combination of multiple models, as described with reference to FIGS. 1-13. The vehicle image can be processed using one or more image parsing techniques and pattern matching techniques to separate a particular vehicle component from other components of the vehicle that are not damaged. In some implementations, identification of a vehicle component includes extracting a convolutional feature data of the image by using a convolutional neural network, and extracting a local feature point set of the image by using a predetermined algorithm. For example, the convolutional feature data x of a component image u can be extracted. A convolutional neural network Np is constructed, and the last output vector of a pooling layer in the convolutional neural network Np is used as a convolutional network feature of the component image u. The local feature point set can be obtained by using scale-invariant feature transform (scale-invariant feature transform, SIFT), and a first local feature point set y of the image u is extracted. SIFT can be used as local feature data of an image. Other feature data, for example, a feature such as features from accelerated segment test (FAST) can also be used. The convolutional feature data of a sampling region in the component image can be used to obtain a similar region whose convolutional feature data is the most similar to the first convolutional feature data. A plurality of sampling regions can be selected from the component image that is used for image matching. For example, the size of each sampling region is set to be the same as the size of the component image or a cropped component image, and the sampling regions are sequentially selected from the upper left corner of the component image. A set of sampling regions can be formed after all the sampling regions of the component image are obtained. The convolutional feature data of each sampling region is computed. The convolutional feature data is compared with the convolutional feature data of the sampling region in the component image. The sampling region including the convolutional feature data that is the most similar to the first convolutional feature data is obtained, and is used as a similar region. In some implementations, the similar region is determined by extracting convolutional feature data of a sliding window region in the component image by using a sliding window. The convolutional feature data can be obtained by using a convolutional neural network that is the same with the one used for extracting the convolutional feature data x. The second convolutional feature data set can be selected from the similar region whose convolutional feature data is the most similar to the first convolutional feature data. For example, for each image t in Tk, different sizes of sliding windows can be used to extract the second convolutional feature data of different regions in the component image, by using a convolutional neural network that is the same as the one used for extracting the first convolutional feature data x. A region r whose second convolutional feature data is the most similar to the first convolutional feature data x is selected from all regions. Similarity can be calculated by using cosine similarity. In some implementations, an image region range of the similar region can be expanded to obtain more local feature data in a larger range, and improve matching processing reliability. Correspondingly, the second local feature point set includes an extracted local feature point set of the similar region whose image region range is expanded. The method of expanding the image region range of the similar region can be customized based on a processing requirement. The image region range of the similar region can be expanded towards a left side, a right side, an upper side, and a lower side of the similar region by a predetermined percentage. The image region range of the similar region can be expanded within a predetermined percentage range, to include a particular target number of second local feature points. The target number can include twice the number of corresponding first local feature points. For example, the image region range of the similar region can be expanded by 50%, and each side of the similar region r is extended by 50% (an image is generally preprocessed to be a square image), so that a data requirement of feature extraction can be met, and a computing amount can be properly controlled. From 1408, method 1400 proceeds to 1410.

At 1410, images are matched. Image matching is performed between a first image that includes the identified vehicle component and a second image or a second set of images. The second image or set of images are other images received from the user, in which vehicle component identification failed to determine a vehicle component in the remaining images. For example, six of the ten images uploaded by the user can include information about the vehicle itself, and the rest are images of identifications. Image P1 from the six vehicle images is a local detail image of a component of the vehicle. A constructed component identification model cannot identify the component type and the component location in the image P1, but vehicle components included in the remaining five vehicle images are identified. The image PI is matched to each of the remaining five images P2, P3, P4, P5, calculating and determining whether a location region in the five images matches image information of the image P1, and satisfies a requirement, for example, a matching degree is the highest and meet the lowest matching degree requirement. Data used for matching can be visual feature data of an image pixel (for example, RGB, a gradient, a gradation, etc.) or other image data information. Image matching can indicate that a first location of a first vehicle component included in P2 is most similar to a second location of a second vehicle component in the image P1, and satisfies a requirement for a minimum similarity score by exceeding a predetermined similarity threshold. Based on the matching outcome, the vehicle component at a corresponding location in P2 is used as an identified vehicle component in the image P1. In some implementations, matching algorithm includes one or more image
transformations applied to at least one of the first and second images. Conventional image transformation in the rectangular coordinate system can be a linear transformation, such as, converting an image into a vector for multiplication. For vehicle loss assessment processing, a damaged component is considered as potentially deformed in comparison with image information in a normal state, or is displaced in comparison with an undamaged component. In some implementations, the image transformation includes an affine transformation. The affine transformation can include a transformation that satisfies an affine combination, such as linear transformation plus translation. In some implementations, image matching can include a deduplication process for images whose similarity reaches a predetermined threshold. The deduplication process is applied to delete images having a high degree of similarity that are repeatedly photographed at the same angle and do not present damage information different from each other. From 1410, method 1400 proceeds to 1412.

At 1412, the vehicle component is processed to identify one or more damaged area locations and one or more damage types of the auto parts based on a particular model by using a component damage identification algorithm. The component identification model used to identify a vehicle component in an image can include a machine-learning algorithm. The component identification model is trained on sample images to identify the vehicle components contained in the component image. Multiple component identification models can be used to determine the vehicle component. The output of each component identification model can include the vehicle component characterization and a confidence level. The component identification models can include a network model of a deep neural network, a variant network model, a convolutional neural network (CNN) model, a region proposal network (RPN) model or a combination of multiple models, as described with reference to FIGS. 1-13. The vehicle image can be processed using one or more image parsing techniques and pattern matching techniques to separate a particular vehicle component from other components of the vehicle that are not damaged. The CNN can include a convolution layer and other structures, such as an activation layer, and is mainly used for damage identification in one or more images. CNN model can combine two-dimensional discrete convolution operations in image processing with an artificial neural network. The convolution operation can be used for automatic extraction a damage feature. The damage feature (which can be a two-dimensional feature extracted by using the convolutional neural network) extracted from an image (in any size) can be input to the RPN model for additional processing. The RPN model can process the damage feature to generate component characterization as a set of three-dimensional damage data sets (rectangular target proposal boxes). For example, a single damage image can include a plurality of damaged parts. Each three-dimensional damage data set can correspond to a particular damaged part of the plurality of damaged parts. If there is one damaged part, one image region is output; if there are k damaged parts, k image regions are output; or if there is no damaged part, zero image regions are output. Each three-dimensional damage data set includes a score (e.g., 1, 2, 3) to differentiate between mild, moderate and severe damages, to define damage classifications (the damage classification is used to determine a damage type), and confidence levels (the confidence level herein is a parameter indicating a degree of authenticity of a damage type). The damage type can include mild scratching, severe scratching, mild deformation, moderate deformation, severe deformation, damage, and disassembling-required check.

In some implementations, the component regions can be processed to extract one or more feature vectors. Image clustering can be performed for the same vehicle component based on the feature vectors, to characterize the damaged component. The damaged parts corresponding to the same damaged component can be combined and damage clustering feature data can be acquired for the damaged parts. The damage clustering feature data can be used to determine the damaged part included in the damaged component and the damage type corresponding to the damaged part. For example, any identified damaged component p corresponding to one or more damaged parts (including the damage type, a position, and a confidence level) can be identified in one or more images that can be clustered. A feature vector corresponding to a damage image processed by the component identification model (CNN model) can be used to calculate an image distance. The damaged parts corresponding to the same cluster t can be combined as a feature Ft. Multiple features (Ft1, Ft2, ...) of top-C images (images selected based on the quantity of weighted damaged parts in the cluster, and a weighted value is a confidence level of the damaged part) in the cluster can be selected as feature input to a multiclass gradient boosting decision tree (GBDT). The GBDT model is used to output a damage type and a damage degree. The GBDT model can be obtained through gradient descent training by using marking data. The purpose of clustering is to identify images taken for parts of a roughly same damaged component. The damaged component in the to-be-processed image, the corresponding damaged part, and the corresponding damage type are determined based on the damaged components, the damaged parts, and the damage types. Combining damaged parts belonging to the same damaged component can include: selecting and combining damaged parts in multiple images corresponding to the same damaged component in an image cluster, in descending order of confidence levels (weighted values of damaged parts). The processing speed can be improved by decreasing the number of processed images based on the confidence levels. For example, a maximum number of images with a confidence level equal or higher than a preselected confidence level can be used to control the processing load and consequently the processing speed. In some implementations, the component type and the component location in an image can be identified by using image matching based on images with known damage types. For example, each image u in Tu can be matched to an image in Tk, to find from Tk the image k that contains the locations included in u, and identify affine transformation between u and k, so as to obtain a component type and a component location in the image u. In some implementations, image matching can be performed by using a network structure of Siamese networks (Siamese network) and can be based on image SIFT and a CNN feature, to obtain affine transformation between matched images, so as to obtain a damage type at a corresponding location. From 1412, method 1400 proceeds to 1414.

At 1414, a maintenance plan is generated based on the identified damaged area locations and damage types. The maintenance plan is included in the vehicle loss assessment. The maintenance plan can be generated using a rule engine. The rule engine can invoke different pricing scheme databases based on a maintenance strategy associated to the vehicle model, location, and available repair shops, to generate, based on a set of rules, at least one maintenance plan for the damaged vehicle part including the maintenance services that can remedy the identified damage. The rules can include front-end rules and back-end rules. The front-end rules can indicate contract requirements, such as a minimum type of information type necessary to determine a maintenance plan. These contract-based features may include labor rates, chargeable hours per particular task, or any other aspect of the work covered by the maintenance plan. The back-end rules can indicate whether the maintenance plan aligns with the identified damage (e.g., in the case of a front-end collision, the system would flag a rear tail light assembly indicated as needing maintenance). In some cases, the maintenance plan includes maintenance cost estimates. If the output maintenance plan does not include maintenance costs, the maintenance plan can be classified as damage assessment part. If the maintenance plan includes maintenance costs, it can be considered that calculation processing is performed on both damage assessment and price assessment. The maintenance plan can include time estimates corresponding to possible maintenance services and locations. In some implementations, generating the maintenance plan includes transmitting assignment data one or more vehicle repair shops as part of the first notice of loss (FNOL) process to generate assignment estimates. Assignment data may include, but not be limited to, damage information, customer name, contact information, insurance claim number, assignment date, loss date, loss type, loss type detail, loss description, current vehicle location, location where vehicle may be sent, deductible amount, vehicle type, year/make/model, vehicle identification number (VIN), license plate number, towing company information, damage information, prior damage information, and vehicle safety status (drivable/non-drivable). From 1414, method 1400 proceeds to 1416.

At 1416, the maintenance plan is transmitted to the user and/or an insurer associated to the vehicle. The maintenance plan transmission can include generating a maintenance plan code interpretable by the application configured to support the vehicle maintenance. The plan code can be formatted to minimize the amount of transmitted data to minimize bandwidth requirements and to increase the speed of the visualization process. The application can be configured to generate an alert for the user to indicate that the maintenance plan is ready to be reviewed. The application can be configured to display the maintenance plan for the user of the mobile device on a graphical user interface of the application. From 1416, method 1400 proceeds to 1418.

At 1418, an approval of the maintenance plan can be received from the user and/or the insurer. The approval of the maintenance plan can indicate if the financial responsibility or the vehicle loss compensation is accepted by the user, the insurer, and/or a third party. The approval of the maintenance plan can include a selection of a maintenance shop and at least a portion of the possible maintenance services listed in the proposed maintenance plan. The approval of the maintenance plan can include a preferred timing to initiate the maintenance plan. From 1418, method 1400 proceeds to 1420.

At 1420, in response to receiving the approval of the maintenance plan, the maintenance plan is initiated. Initiating the maintenance plan can include transmitting work assignment data a selected vehicle maintenance shop to conduct maintenance operations. An advantage of communication with the vehicle maintenance shop is the ability to offer real-time updates when any of the information changes during the course of the claim and/or maintenance and may expedite the maintenance for the customer. After 1420, method 1400 stops.

The implementations of the present disclosure can improve corresponding data sharing efficiency, while reducing computing resources by minimizing the amount of transmitted data to minimize bandwidth requirements and to increase the speed of vehicle loss assessment generation process.

Embodiments and the operations described in this specification can be implemented in digital electronic circuitry, or in computer software, firmware, or hardware, including the structures disclosed in this specification or in combinations of one or more of them. The operations can be implemented as operations performed by a data processing apparatus on data stored on one or more computer-readable storage devices or received from other sources. A data processing apparatus, computer, or computing device may encompass apparatus, devices, and machines for processing data, including by way of example a programmable processor, a computer, a system on a chip, or multiple ones, or combinations, of the foregoing. The apparatus can include special purpose logic circuitry, for example, a central processing unit (CPU), a field programmable gate array (FPGA) or an application-specific integrated circuit (ASIC). The apparatus can also include code that creates an execution environment for the computer program in question, for example, code that constitutes processor firmware, a protocol stack, a database management system, an operating system (for example an operating system or a combination of operating systems), a cross-platform runtime environment, a virtual machine, or a combination of one or more of them. The apparatus and execution environment can realize various different computing model infrastructures, such as web services, distributed computing and grid computing infrastructures.

A computer program (also known, for example, as a program, software, software application, software module, software unit, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A program can be stored in a portion of a file that holds other programs or data (for example, one or more scripts stored in a markup language document), in a single file dedicated to the program in question, or in multiple coordinated files (for example, files that store one or more modules, sub-programs, or portions of code). A computer program can be executed on one computer or on multiple computers that are located at one site or distributed across multiple sites and interconnected by a communication network.

Processors for execution of a computer program include, by way of example, both general- and special-purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data. A computer can be embedded in another device, for example, a mobile device, a personal digital assistant (PDA), a game console, a Global Positioning System (GPS) receiver, or a portable storage device. Devices suitable for storing computer program instructions and data include non-volatile memory, media and memory devices, including, by way of example, semiconductor memory devices, magnetic disks, and magneto-optical disks. The processor and the memory can be supplemented by, or incorporated in, special-purpose logic circuitry.

Mobile devices can include handsets, user equipment (UE), mobile telephones (for example, smartphones), tablets, wearable devices (for example, smart watches and smart eyeglasses), implanted devices within the human body (for example, biosensors, cochlear implants), or other types of mobile devices. The mobile devices can communicate wirelessly (for example, using radio frequency (RF) signals) to various communication networks (described below). The mobile devices can include sensors for determining characteristics of the mobile device's current environment. The sensors can include cameras, microphones, proximity sensors, GPS sensors, motion sensors, accelerometers, ambient light sensors, moisture sensors, gyroscopes, compasses, barometers, fingerprint sensors, facial recognition systems, RF sensors (for example, Wi-Fi and cellular radios), thermal sensors, or other types of sensors. For example, the cameras can include a forward- or rear-facing camera with movable or fixed lenses, a flash, an image sensor, and an image processor. The camera can be a megapixel camera capable of capturing details for facial and/or iris recognition. The camera along with a data processor and authentication information stored in memory or accessed remotely can form a facial recognition system. The facial recognition system or one-or-more sensors, for example, microphones, motion sensors, accelerometers, GPS sensors, or RF sensors, can be used for user authentication.

To provide for interaction with a user, embodiments can be implemented on a computer having a display device and an input device, for example, a liquid crystal display (LCD) or organic light-emitting diode (OLED)/virtual-reality (VR)/augmented-reality (AR) display for displaying information to the user and a touchscreen, keyboard, and a pointing device by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments can be implemented using computing devices interconnected by any form or medium of wireline or wireless digital data communication (or combination thereof), for example, a communication network. Examples of interconnected devices are a client and a server generally remote from each other that typically interact through a communication network. A client, for example, a mobile device, can carry out transactions itself, with a server, or through a server, for example, performing buy, sell, pay, give, send, or loan transactions, or authorizing the same. Such transactions may be in real time such that an action and a response are temporally proximate; for example an individual perceives the action and the response occurring substantially simultaneously, the time difference for a response following the individual's action is less than 1 millisecond (ms) or less than 1 second (s), or the response is without intentional delay taking into account processing limitations of the system.

Examples of communication networks include a local area network (LAN), a radio access network (RAN), a metropolitan area network (MAN), and a wide area network (WAN). The communication network can include all or a portion of the Internet, another communication network, or a combination of communication networks. Information can be transmitted on the communication network according to various protocols and standards, including Long Term Evolution (LTE), 5G, IEEE 802, Internet Protocol (IP), or other protocols or combinations of protocols. The communication network can transmit voice, video, biometric, or authentication data, or other information between the connected computing devices.

## Claims

1. A computer implemented image-based method for assessing vehicle damage, wherein the method comprises:
obtaining (S1), at a cloud server and from a mobile device, to-be-processed images, wherein the to-be-processed images comprise photographs of a damaged vehicle taken using the mobile device and uploaded to the cloud server using a mobile application;
examining (S2), by a pre-constructed component identification model configured through training on marked sample images of vehicle components to identify vehicle components included in an image, the to-be-processed images to identify vehicle components in one or more of the to-be-processed images and designating the to-be-processed images as component images or local images, wherein i) a component image comprises an image for which the component identification model successfully identifies one or more vehicle components in the image and ii) a local image comprises an image for which the component identification model fails to identify a vehicle component in the image;
performing (S3) image matching between i) one or more component images that comprise vehicle components identified by the component identification model and ii) a local image in the to-be-processed images, the performing comprising
a) matching the local image to each of the one or more component images, wherein data used for matching the local image to each of the one or more component images comprises visual feature data of image pixels, the visual feature data comprising RBG data, gradient data or gradation data, the matching comprising calculating and determining whether a location region in the one or more component images matches image information of the local image and satisfies a predetermined matching degree requirement, wherein the predetermined matching degree requirement comprises a highest matching degree that meets a predetermined required lowest matching degree, and
b) after matching the local image to each of the one or more component images, identifying a location of a vehicle component in a component image that is most similar to a location of a vehicle component in the local image and satisfies a predetermined similarity threshold;
designating, based on an outcome of the image matching, a vehicle component at the identified location in the component image as an identified vehicle component in the local image;
examining (S4), by a pre-constructed damage identification model configured through training on sample images showing damage to identify damaged parts of a vehicle and corresponding damage types, the to-be-processed images to identify damaged parts and damage types in the to-be-processed images; and
based on a) the identified vehicle components in the component images, b) the identified vehicle component in the local image, c) the identified damaged parts, and d) the identified damage types, determining (S5) i) a damaged component in the to-be-processed images, ii) a damaged part that corresponds to the damaged component, and iii) a damage type that corresponds to the damaged component

2. The method according to claim 1, wherein the method further comprises:
generating a maintenance plan based on information that comprises i) the determined damaged component in the to-be-processed images, ii) the determined damaged part that corresponds to the damaged component, iii) the determined damage type that correspond to the damaged component, and
optionally one or more of a) returning, by the cloud server and to the mobile device, the generated maintenance plan or b) initiating the generated maintenance plan by transmitting work assignment data to a selected vehicle maintenance shop to conduct maintenance operations.

3. The method according to claim 1, wherein performing image matching between i) one or more component images that comprise vehicle components identified by the component identification model and ii) a local image in the to-be-processed images comprises:
extracting first convolutional feature data of the local image using a convolutional neural network, and extracting a first local feature point set of the local image using a predetermined algorithm such as a scale-invariant feature transform;
comparing the first convolutional feature data with convolutional feature data of a sampled region in a component image of the one or more component images, and obtaining a similar region whose convolutional feature data is the most similar to the first convolutional feature data;
extracting a second local feature point set of the similar region using the predetermined algorithm, matching the first local feature point set and the second local feature point set, to obtain a matching point pair, and obtaining affine transformation between the local image and the component image by minimizing a location error of the matching point pair during affine transformation; and
selecting, as the vehicle component in the local image, a component that is in the component image and that corresponds to an image region that has a smallest location error.

4. The method according to claim 3, wherein comparing the first convolutional feature data with convolutional feature data of a sampled region in the component image, and obtaining a similar region whose convolutional feature data is the most similar to the first convolutional feature data comprises:
for the component image, extracting second convolutional feature data of a sliding window region in the component image using a sliding window, and obtaining a second convolutional feature data set, wherein the second convolutional feature data is obtained using a convolutional neural network the same as the convolutional neural network used for extracting the first convolutional feature data; and
selecting, from the second convolutional feature data set, the similar region whose convolutional feature data is the most similar to the first convolutional feature data, wherein similarity is calculated using cosine similarity.

5. The method according to claim 3, wherein the method further comprises:
expanding an image region range of the similar region in a predetermined manner, wherein the second local feature point set comprises an extracted local feature point set of the similar region whose image region range is expanded.

6. The method according to claim 5, wherein expanding an image region range of the similar region in a predetermined manner comprises extending a left side, a right side, an upper side, and a lower side of the similar region by a predetermined percentage, wherein a value range of the predetermined percentage comprises 50%.

7. The method according to claim 1, wherein after obtaining the to-be-processed images, at least one type of the following image processing is further performed:
if the to-be-processed images comprise a plurality of types of image information, classifying the to-be-processed images using an image classification algorithm, and selecting, as an image for vehicle loss assessment processing, an image related to vehicle loss assessment processing information; or
determining image quality of the to-be-processed images, and deleting a to-be-processed image whose image quality does not meet a requirement; or
performing deduplication processing on to-be-processed images whose similarity reaches a predetermined threshold.

8. The method according to claim 2, wherein the method further comprises obtaining information about a maintenance strategy of the damaged component, wherein the maintenance plan further comprises an estimated repair price corresponding to the maintenance strategy, the estimated repair price comprising an estimated repair price of the damaged component that is obtained through calculation based on the damaged component, the damaged part, the damage type, the damaged degree and the information about the maintenance strategy after price data of a product and/or a repair service of the damaged component in the maintenance strategy is queried.

9. The method according to claim 1, wherein the to-be-processed images are examined using an identification model comprising a deep neural network, wherein the deep neural network is:
constructed and generated through sample data training, and
based on network models comprising a convolutional layer and a region proposal layer.

10. The method according to claim 9, wherein determining the damaged component in the to-be-processed images, the damaged part that corresponds to the damaged component, the damage type that correspond to the damaged component and the damage degree that corresponds to the damaged component comprises:
obtaining a set of to-be-processed images that comprise a damaged part;
extracting a feature vector of the to-be-processed images in the set using a convolutional neural network and performing image clustering processing for a same vehicle component based on the feature vector, and determining the damaged component;
combining damaged parts in the same damaged component, and obtaining damage cluster feature data of the damaged parts; and
determining, based on the damage cluster feature data, the damaged part included in the damaged component and the damage type corresponding to the damaged part.

11. The method according to claim 10, wherein combining damaged parts in the same damaged component, and obtaining damage cluster feature data of the damaged parts comprises:
combining damaged parts in K to-be-processed images that are selected in descending order of confidence levels from to-be-processed images for a same damage sample component in an image cluster, wherein K≥2; and
selecting, from the combined image cluster, damage cluster feature data of C to-be-processed images in descending order of weighted values of damaged parts, wherein C≥2, and a weight factor of the weighted value is a confidence level of a damaged part.

12. The method according to claim 11, wherein identifying a damaged part in a damage sample image and a damage type based on the damage cluster feature data comprises identifying the damaged part and the damage type using the damage cluster feature data as input data of a predetermined multi-classification gradient boosting decision tree model.

13. The method according to claim 1, wherein examining the to-be-processed images to identify a vehicle component in the to-be-processed images and examining the to-be-processed images to identify a damaged part and a damage type in the to-be-processed images is performed in parallel.

14. An apparatus for image-based assessment of vehicle damage, the apparatus comprising a processor and a memory that is configured to store a processor executable instruction, wherein when executing the instruction, the processor implements operations according to any one of claims 1 to 13.

15. A computer readable storage medium, wherein the computer readable storage medium stores a computer instruction, and when the instruction is executed, steps according to any one of claims 1 to 13 are implemented.

## Patentansprüche

1. Computerimplementiertes bildbasiertes Verfahren zum Beurteilen einer Fahrzeugbeschädigung, wobei das Verfahren Folgendes umfasst:
Erhalten (S1), an einem Cloud-Server und von einem Mobilgerät, zu verarbeitender Bilder, wobei die zu verarbeitenden Bilder Fotografien eines beschädigten Fahrzeugs, die unter Verwendung des Mobilgeräts aufgenommen wurden und unter Verwendung einer Mobilanwendung zu dem Cloud-Server hochgeladen wurden, umfassen;
Untersuchen (S2), durch ein vorerstelltes Komponentenidentifikationsmodell, das durch Training an markierten Musterbildern von Fahrzeugkomponenten konfiguriert wurde, zum Identifizieren von Fahrzeugkomponenten, die in einem Bild enthalten sind, der zu verarbeitenden Bilder, um Fahrzeugkomponenten in einem oder mehreren der zu verarbeitenden Bilder zu identifizieren, und Bezeichnen der zu verarbeitenden Bilder als Komponentenbilder oder Lokalbilder, wobei i) ein Komponentenbild ein Bild umfasst, für das das Komponentenidentifikationsmodell erfolgreich eine oder mehrere Fahrzeugkomponenten in dem Bild identifiziert, und ii) ein Lokalbild ein Bild umfasst, für das das Komponentenidentifikationsmodell versagt, eine Fahrzeugkomponente in dem Bild zu identifizieren;
Durchführen (S3) von Bildabgleich zwischen i) einem oder mehreren Komponentenbildern, die Fahrzeugkomponenten, die durch das Komponentenidentifikationsmodell identifiziert wurden, enthalten, und ii) einem Lokalbild in den zu verarbeitenden Bildern, wobei das Durchführen Folgendes umfasst:
a) Abgleichen des Lokalbilds mit jedem des einen oder der mehreren Komponentenbilder, wobei Daten, die zum Abgleichen des Lokalbilds mit jedem des einen oder der mehreren Komponentenbilder verwendet werden, Visuelles-Merkmal-Daten von Bildpixeln umfassen, wobei die Visuelles-Merkmal-Daten RGB-Daten, Gradientendaten oder Gradationsdaten umfassen, wobei das Abgleichen Berechnen und Bestimmen, ob eine Ortsregion in dem einen oder den mehreren Komponentenbildern mit Bildinformationen des Lokalbilds übereinstimmt und eine vorbestimmte Übereinstimmungsgradanforderung erfüllt, wobei die vorbestimmte Übereinstimmungsgradanforderung einen höchsten Übereinstimmungsgrad, der einem vorbestimmten erforderlichen niedrigsten Übereinstimmungsgrad genügt, umfasst und
b) nach Abgleichen des Lokalbilds mit jedem des einen oder der mehreren Komponentenbilder, Identifizieren eines Orts einer Fahrzeugkomponente in einem Komponentenbild, der einem Ort einer Fahrzeugkomponente in dem Lokalbild am ähnlichsten ist und eine vorbestimmte Ähnlichkeitsschwelle erfüllt;
Bezeichnen, auf der Grundlage eines Resultats des Bildabgleichs, einer Fahrzeugkomponente an dem identifizierten Ort in dem Komponentenbild als eine identifizierte Fahrzeugkomponente in dem Lokalbild;
Untersuchen (S4), durch ein vorerstelltes Beschädigungsidentifikationsmodell, das durch Training an Musterbildern, die Beschädigung zeigen, konfiguriert wurde, zum Identifizieren von beschädigten Teilen eines Fahrzeugs und von entsprechenden Beschädigungsarten, der zu verarbeitenden Bilder, um beschädigte Teile und Beschädigungsarten in den zu verarbeitenden Bildern zu identifizieren, und
auf der Grundlage von a) den identifizierten Fahrzeugkomponenten in den Komponentenbildern, b) der identifizierten Fahrzeugkomponente in dem Lokalbild, c) der identifizierten beschädigten Teile und d) der identifizierten Beschädigungsarten, Bestimmen (S5) i) einer beschädigten Komponente in den zu verarbeitenden Bildern, ii) eines beschädigten Teils, das der beschädigten Komponente entspricht, und iii) einer Beschädigungsart, die der beschädigten Komponente entspricht.

2. Verfahren nach Anspruch 1, wobei das Verfahren ferner Folgendes umfasst:
Erzeugen eines Instandsetzungsplans auf der Grundlage von Informationen, die i) die bestimmte beschädigte Komponente in den zu verarbeitenden Bildern, ii) das bestimmte beschädigte Teil, das der beschädigten Komponente entspricht, iii) der bestimmten Beschädigungsart, die der beschädigten Komponente entspricht, und
optional a) Rücksenden, durch den Cloud-Server und an das Mobilgerät, des erzeugten Instandsetzungsplans und/oder b) Initiieren des erzeugten Instandsetzungsplans durch Übertragen von Arbeitszuweisungsdaten an eine ausgewählte Fahrzeuginstandsetzungswerkstatt, um die Instandsetzungsoperationen auszuführen.

3. Verfahren nach Anspruch 1, wobei Durchführen von Bildabgleich zwischen i) einem oder mehreren Komponentenbildem, die Fahrzeugkomponenten, die durch das Komponentenidentifikationsmodell identifiziert wurden, enthalten, und ii) einem Lokalbild in den zu verarbeitenden Bildern Folgendes umfasst:
Extrahieren von ersten Faltungsmerkmalsdaten des Lokalbilds unter Verwendung eines Faltungs-Neuronales-Netzes und Extrahieren einer ersten Lokalmerkmalspunktmenge des Lokalbilds unter Verwendung eines vorbestimmten Algorithmus, wie etwa einer skaleninvarianten Merkmalstransformation;
Vergleichen der ersten Faltungsmerkmalsdaten mit Faltungsmerkmalsdaten einer Musterregion in einem Komponentenbild des einen oder der mehreren Komponentenbilder und Erhalten einer ähnlichen Region, deren Faltungsmerkmalsdaten den ersten Faltungsmerkmalsdaten am ähnlichsten sind;
Extrahieren einer zweiten Lokalmerkmalspunktmenge der ähnlichen Region unter Verwendung des vorbestimmten Algorithmus, Abgleichen der ersten Lokalmerkmalspunktmenge und der zweiten Lokalmerkmalspunktmenge, um ein Übereinstimmungspunktpaar zu erhalten, und Erhalten einer affinen Transformation zwischen dem Lokalbild und dem Komponentenbild durch Minimieren eines Ortsfehlers des Übereinstimmungspunktpaars während der affinen Transformation; und
Auswählen, als die Fahrzeugkomponente in dem Lokalbild, einer Komponente, die sich in dem Komponentenbild befindet und die einer Bildregion entspricht, die einen kleinsten Ortsfehler aufweist.

4. Verfahren nach Anspruch 3, wobei Vergleichen der ersten Faltungsmerkmalsdaten mit Faltungsmerkmalsdaten einer Musterregion in dem Komponentenbild und Erhalten einer ähnlichen Region, deren Faltungsmerkmalsdaten den ersten Faltungsmerkmalsdaten am ähnlichsten sind, Folgendes umfasst:
für das Komponentenbild, Extrahieren von zweiten Faltungsmerkmalsdaten einer Gleitfensterregion in dem Komponentenbild unter Verwendung eines Gleitfensters und Erhalten einer zweiten Faltungsmerkmalsdatenmenge, wobei die zweite Faltungsmerkmalsdatenmenge unter Verwendung eines Faltungs-Neuronales-Netzes, das dasselbe wie das zum Extrahieren der ersten Faltungsmerkmalsdaten verwendete Faltungs-Neuronales-Netz ist, erhalten wird; und
Auswählen, aus der zweiten Faltungsmerkmalsdatenmenge, der ähnlichen Region, deren Faltungsmerkmalsdaten den ersten Faltungsmerkmalsdaten am ähnlichsten sind, wobei Ähnlichkeit unter Verwendung einer Kosinus-Ähnlichkeit berechnet wird.

5. Verfahren nach Anspruch 3, wobei das Verfahren ferner Folgendes umfasst:
Expandieren eines Bildregionsbereichs der ähnlichen Region auf eine vorbestimmte Weise, wobei die zweite Lokalmerkmalspunktmenge eine extrahierte Lokalmerkmalspunktmenge der ähnlichen Region, deren Bildregion expandiert wurde, umfasst.

6. Verfahren nach Anspruch 5, wobei Expandieren eines Bildregionsbereichs der ähnlichen Region auf eine vorbestimmte Weise Ausweiten einer linken Seite, einer rechten Seite, einer Oberseite und einer Unterseite der ähnlichen Region um einen vorbestimmten Prozentsatz umfasst, wobei ein Wertebereich des vorbestimmten Prozentsatzes 50% umfasst.

7. Verfahren nach Anspruch 1, wobei, nach Erhalten der zu verarbeitenden Bilder, ferner mindestens eine Art der folgenden Bildverarbeitung durchgeführt wird:
falls die zu verarbeitenden Bilder eine Vielzahl von Arten von Bildinformationen umfassen, Klassifizieren der zu verarbeitenden Bilder unter Verwendung eines Bildklassifikationsalgorithmus und Auswählen, als ein Bild für Fahrzeugverlustbeurteilungsverarbeitung, eines Bilds, das Fahrzeugverlustbeurteilungsverarbeitungsinformationen betrifft; oder
Bestimmen von Bildqualität der zu verarbeitenden Bilder und Löschen eines zu verarbeitenden Bilds, dessen Qualität einer Anforderung nicht genügt; oder
Durchführen einer Entdopplungsverarbeitung an den zu verarbeitenden Bildern, deren Ähnlichkeit eine vorbestimmte Schwelle erreicht.

8. Verfahren nach Anspruch 2, wobei das Verfahren ferner Erhalten von Informationen über eine Instandsetzungsstrategie der beschädigten Komponenten umfasst, wobei der Instandsetzungsplan ferner einen geschätzten Reparaturpreis, der der entsprechenden Instandsetzungsstrategie entspricht, umfasst, wobei der geschätzte Reparaturpreis einen geschätzten Reparaturpreis der beschädigten Komponente umfasst, der durch Berechnung auf der Grundlage der beschädigten Komponente, des beschädigten Teils, der Beschädigungsart, des Beschädigungsgrads und den Informationen über die Instandsetzungsstrategie, nachdem Preisdaten eines Produkt und/oder eines Reparaturdienstes der beschädigten Komponente in der Instandsetzungsstrategie angefragt wurden, erhalten wurde.

9. Verfahren nach Anspruch 1, wobei die zu verarbeitenden Bilder unter Verwendung eines Identifikationsmodells, das ein tiefes neuronales Netz umfasst, untersucht werden, wobei das tiefe neuronale Netz Folgendes ist:
erstellt und erzeugt durch Musterdatentraining, und
basierend auf Netzmodellen, die eine Faltungsschicht und eine Regionenvorschlagsschicht umfassen.

10. Verfahren nach Anspruch 9, wobei Bestimmen der beschädigten Komponente in den zu verarbeitenden Bildern, des beschädigten Teils, das der beschädigten Komponente entspricht, der Beschädigungsart, die der beschädigten Komponente entspricht, und des Beschädigungsgrads, der der beschädigten Komponente entspricht, Folgendes umfasst:
Erhalten einer Menge von zu verarbeitenden Bildern, die ein beschädigtes Teil umfassen;
Extrahieren eines Merkmalsvektors der zu verarbeitenden Bilder in der Menge unter Verwendung eines Faltungs-Neuronales-Netzes und Durchführen von Bildclusterungsverarbeitung für eine selbe Fahrzeugkomponente auf der Grundlage des Merkmalsvektors und Bestimmen der beschädigten Komponente;
Kombinieren beschädigter Teile in derselben beschädigten Komponente und Erhalten von Beschädigungsclustermerkmalsdaten der beschädigten Teile; und
Bestimmen, auf der Grundlage der Beschädigungsclustermerkmalsdaten, des beschädigten Teils, das in der beschädigten Komponente enthalten ist, und der Beschädigungsart, die dem beschädigten Teil entspricht.

11. Verfahren nach Anspruch 10, wobei Kombinieren beschädigter Teile in derselben beschädigten Komponente und Erhalten von Beschädigungsclustermerkmalsdaten der beschädigten Teile Folgendes umfasst:
Kombinieren beschädigter Teile in K zu verarbeitenden Bildern, die in fallender Reihenfolge von Vertrauensniveaus aus zu verarbeitenden Bildern für eine selbe beschädigte Komponente ausgewählt werden, in einem Bildcluster, wobei K≥2 ist; und
Auswählen, aus dem kombinierten Bildcluster, von Beschädigungsclustermerkmalsdaten von C zu verarbeitenden Bildern in fallender Reihenfolge von gewichteten Werten von beschädigten Teilen, wobei C≥2 ist, und ein Gewichtsfaktor des gewichteten Werts ein Vertrauensniveau eines beschädigten Teils ist.

12. Verfahren nach Anspruch 11, wobei Identifizieren eines beschädigten Teils in einem Probenbild und eine Beschädigungsart auf der Grundlage der Beschädigungsclustermerkmalsdaten Identifizieren des beschädigten Teils und der Beschädigungsart unter Verwendung der Beschädigungsclustermerkmalsdaten als Eingangsdaten eines vorbestimmen Multi-Klassifikationsgradientensteigerung-Entscheidungsbaummodells umfasst.

13. Verfahren nach Anspruch 1, wobei Untersuchen der zu verarbeitenden Bilder, um eine Fahrzeugkomponente in den zu verarbeitenden Bildern zu identifizieren, und Untersuchen der zu verarbeitenden Bilder, um ein beschädigtes Teil und eine Beschädigungsart in den zu verarbeitenden Bildern zu identifizieren, parallel durchgeführt wird.

14. Einrichtung für bildbasierte Beurteilung einer Fahrzeugbeschädigung, wobei die Einrichtung einen Prozessor und einen Arbeitsspeicher, der zum Speichern einer prozessorausführbaren Anweisung ausgelegt ist, umfasst, wobei der Prozessor beim Ausführen der Anweisung Operationen nach einem der Ansprüche 1 bis 13 implementiert.

15. Computerlesbares Speicherungsmedium, wobei das computerlesbare Speicherungsmedium eine Computeranweisung speichert, und wobei, wenn die Anweisung ausgeführt wird, Schritte nach einem der Ansprüche 1 bis 13 implementiert werden.

## Revendications

1. Procédé d'évaluation de dommages de véhicule à base d'images mis en œuvre par ordinateur, le procédé comprenant :
l'obtention (S1), au niveau d'un serveur nuagique et à partir d'un dispositif mobile, d'images à traiter, les images à traiter comprenant des photographies d'un véhicule endommagé prises à l'aide du dispositif mobile et téléchargées sur le serveur nuagique à l'aide d'une application mobile ;
l'examen (S2), par un modèle d'identification de composants préconstruit configuré par apprentissage sur des échantillons d'images marqués de composants de véhicule pour identifier des composants de véhicule inclus dans une image, des images à traiter pour identifier des composants de véhicule dans une ou plusieurs des images à traiter et la désignation des images à traiter en tant qu'images de composants ou d'images locales, dans lequel i) une image de composant comprend une image pour laquelle le modèle d'identification de composants identifie avec succès un ou plusieurs composants de véhicule dans l'image et ii) une image locale comprend une image pour laquelle le modèle d'identification de composants ne parvient pas à identifier un composant de véhicule dans l'image ;
la réalisation (S3) d'une correspondance d'images entre i) une ou plusieurs images de composants qui comprennent des composants de véhicule identifiés par le modèle d'identification de composants et ii) une image locale dans les images à traiter, la réalisation comprenant
a) la correspondance de l'image locale avec chacune des une ou plusieurs images de composants, dans lequel des données utilisées pour établir une correspondance de l'image locale avec chacune des une ou plusieurs images de composant comprennent des données de caractéristiques visuelles de pixels d'image, les données de caractéristiques visuelles comprenant des données RBG, des données de gradient ou des données de gradation, la comparaison comprenant le calcul et la détermination qu'une région de localisation dans les une ou plusieurs images de composant correspond ou non à des informations d'image de l'image locale et satisfait ou non une exigence de degré de correspondance prédéterminée, l'exigence de degré de correspondance prédéterminée comprenant un degré de correspondance le plus élevé qui satisfait un degré de correspondance le plus bas requis prédéterminé, et
b) après la correspondance de l'image locale avec chacune des une ou plusieurs images de composants, l'identification d'un emplacement d'un composant dans une image de composant qui est le plus similaire à l'emplacement d'un composant de véhicule dans l'image locale et qui satisfait un seuil de similarité prédéterminé ;
la désignation, en fonction d'un résultat de la correspondance d'images, d'un composant de véhicule situé à l'emplacement identifié dans l'image de composant en tant que composant de véhicule identifié dans l'image locale ;
l'examen (S4), par un modèle d'identification de dommages préconstruit configuré par apprentissage sur des échantillons d'images montrant des dommages pour identifier des pièces endommagées d'un véhicule et des types de dommages correspondants, des images à traiter pour identifier des pièces endommagées et des types de dommages dans les images à traiter ; et
en fonction a) des composants de véhicule identifiés dans les images de composants, b) du composant de véhicule identifié dans l'image locale, c) des pièces endommagées identifiées et d) des types de dommages identifiés, la détermination (S5) d'un composant endommagé dans les images à traiter, (ii) d'une pièce endommagée qui correspond au composant endommagé, et iii) d'un type de dommage qui correspond au composant endommagé.

2. Procédé selon la revendication 1, le procédé comprenant en outre :
la génération d'un plan de maintenance basé sur des informations qui comprennent i) le composant endommagé déterminé dans les images à traiter, ii) la pièce endommagée déterminée qui correspond au composant endommagé, iii) le type de dommage déterminé qui correspond au composant endommagé, et
facultativement une ou plusieurs des opérations suivantes a) le renvoi, par le serveur nuagique et au dispositif mobile, du plan de maintenance généré ou b) le lancement du plan de maintenance généré en transmettant des données d'affectation de travail à un atelier de maintenance de véhicules sélectionné pour effectuer des opérations de maintenance.

3. Procédé selon la revendication 1, dans lequel la réalisation d'une correspondance d'images entre i) une ou plusieurs images de composants qui comprennent des composants de véhicule identifiés par le modèle d'identification de composants et ii) une image locale dans les images à traiter comprend :
l'extraction de premières données de caractéristiques convolutionnelles de l'image locale à l'aide d'un réseau neuronal convolutionnel et l'extraction d'un premier ensemble de points de caractéristiques locaux de l'image locale à l'aide d'un algorithme prédéterminé tel qu'une transformée de caractéristique à invariance d'échelle ;
la comparaison des premières données de caractéristiques convolutionnelles à des données de caractéristiques convolutionnelles d'une région échantillonnée dans une image de composant d'une ou de plusieurs images de composants, et l'obtention d'une région similaire dont les données de caractéristiques convolutionnelles sont les plus similaires aux premières données de caractéristiques convolutionnelles ;
l'extraction d'un second ensemble de points de caractéristiques locaux de la région similaire à l'aide de l'algorithme prédéterminé, l'établissement d'une correspondance entre le premier ensemble de points de caractéristiques locaux et le second ensemble de points de caractéristiques locaux, afin d'obtenir une paire de points correspondants, et l'obtention d'une transformation affine entre l'image locale et l'image de composant en minimisant une erreur d'emplacement de la paire de points correspondants durant la transformation affine ; et
la sélection, en tant que composant de véhicule dans l'image locale, d'un composant qui se trouve dans l'image de composant et qui correspond à une région d'image qui présente une plus petite erreur d'emplacement.

4. Procédé selon la revendication 3, dans lequel la comparaison des premières données de caractéristiques convolutionnelles à des données de caractéristiques convolutionnelles d'une région échantillonnée dans l'image de composant, et l'obtention d'une région similaire dont les données de caractéristiques convolutionnelles sont les plus similaires aux premières données de caractéristiques convolutionnelles comprend :
pour l'image de composant, l'extraction de secondes données de caractéristiques convolutionnelles d'une région de fenêtre glissante dans l'image de composant à l'aide d'une fenêtre glissante et l'obtention d'un second ensemble de données de caractéristiques convolutionnelles, les secondes données de caractéristiques convolutionnelles étant obtenues à l'aide d'un réseau neuronal convolutionnel identique au réseau neuronal convolutionnel utilisé pour extraire les premières données de caractéristiques convolutionnelles ; et
la sélection, à partir du second ensemble de données de caractéristiques convolutionnelles, de la région similaire dont les données de caractéristiques convolutionnelles sont les plus similaires aux premières données de caractéristiques convolutionnelles, la similarité étant calculée selon la similarité cosinus.

5. Procédé selon la revendication 3, le procédé comprenant en outre :
l'extension d'une plage de région d'image de la région similaire d'une manière prédéterminée, dans lequel le second ensemble de points de caractéristiques locaux comprend un ensemble de points de caractéristiques locaux extraits de la région similaire dont la plage de région d'image est étendue.

6. Procédé selon la revendication 5, dans lequel l'extension d'une plage de région d'image de la région similaire d'une manière prédéterminée comprend une extension d'un côté gauche, d'un côté droit, d'un côté supérieur et d'un côté inférieur de la région similaire par un pourcentage prédéterminé, une plage de valeurs du pourcentage prédéterminé comprenant 50%.

7. Procédé selon la revendication 1, dans lequel, après l'obtention des images à traiter, au moins un type du traitement d'image suivant est également effectué :
si les images à traiter comprennent une pluralité de types d'informations d'images, la classification des images à traiter à l'aide d'un algorithme de classification d'images et la sélection, comme image pour un traitement d'évaluation de dommages de véhicule, d'une image liée à des informations de traitement d'évaluation de dommages de véhicule ; ou
la détermination d'une qualité d'image des images à traiter et la suppression d'une image à traiter dont la qualité d'image ne satisfait pas une exigence ; ou
la réalisation d'un traitement de déduplication sur des images à traiter dont la similarité atteint un seuil prédéterminé.

8. Procédé selon la revendication 2, le procédé comprenant en outre l'obtention d'informations sur une stratégie de maintenance du composant endommagé, dans lequel le plan de maintenance comprend en outre un coût de réparation estimé correspondant à la stratégie de maintenance, le coût de réparation estimé comprenant un coût de réparation estimé du composant endommagé qui est obtenu par un calcul basé sur le composant endommagé, la pièce endommagée, le type de dommage, le degré d'endommagement et les informations sur la stratégie de maintenance après interrogation de données de coût d'un produit et/ou d'un service de réparation du composant endommagé dans la stratégie de maintenance.

9. Procédé selon la revendication 1, dans lequel les images à traiter sont examinées à l'aide d'un modèle d'identification comprenant un réseau neuronal profond, le réseau neuronal profond étant :
construit et généré par apprentissage d'exemples de données, et
basé sur des modèles de réseau comprenant une couche convolutionnelle et une couche de proposition de région.

10. Procédé selon la revendication 9, dans lequel la détermination du composant endommagé dans les images à traiter, de la pièce endommagée qui correspond au composant endommagé, du type de dommage qui correspond au composant endommagé et du degré d'endommagement qui correspond au composant endommagé comprend :
l'obtention d'un ensemble d'images à traiter qui comprennent une pièce endommagée ;
l'extraction d'un vecteur de caractéristique des images à traiter dans l'ensemble à l'aide d'un réseau neuronal convolutionnel et la réalisation d'un traitement de regroupement d'images d'un même composant de véhicule en fonction du vecteur de caractéristique, et la détermination du composant endommagé ;
la combinaison de pièces endommagées dans le même composant endommagé et l'obtention de données de caractéristiques de groupe de dommages des pièces endommagées ; et
la détermination, en fonction des données de caractéristiques de groupe de dommages, de la pièce endommagée incluse dans le composant endommagé et du type de dommage correspondant à la pièce endommagée.

11. Procédé selon la revendication 10, dans lequel la combinaison de pièces endommagées dans le même composant endommagé, et l'obtention de données de caractéristiques de groupe de dommages des pièces endommagées comprend :
la combinaison de pièces endommagées dans K images à traiter qui sont sélectionnées par ordre décroissant de niveaux de confiance parmi des images à traiter pour un même échantillon de composant endommagé dans un groupe d'images, dans lequel K ≥ 2 ; et
la sélection, dans le groupe d'images combinées, de données de caractéristiques de groupe de dommages de C images à traiter par ordre décroissant de valeurs pondérées de pièces endommagées, dans lequel C ≥ 2, et un facteur de pondération de la valeur pondérée est un niveau de confiance d'une pièce endommagée.

12. Procédé selon la revendication 11, dans lequel l'identification d'une pièce endommagée dans un échantillon d'image de dommage et d'un type de dommage en fonction des données de caractéristiques de groupe de dommages comprend l'identification de la pièce endommagée et du type de dommage au moyen des données de caractéristiques de groupe de dommages comme données d'entrée d'un modèle d'arbre de décision de multi-classification à boosting de gradient prédéterminé.

13. Procédé selon la revendication 1, dans lequel l'examen des images à traiter pour identifier un composant de véhicule dans les images à traiter et l'examen des images à traiter pour identifier une pièce endommagée et un type de dommage dans les images à traiter sont réalisés en parallèle.

14. Appareil d'évaluation à base d'image de dommages de véhicule, l'appareil comprenant un processeur et une mémoire configurée pour mémoriser une instruction exécutable par processeur, dans lequel, lors de l'exécution de l'instruction, le processeur met en œuvre des opérations selon l'une quelconque des revendications 1 à 13.

15. Support de mémorisation lisible par ordinateur, le support de mémorisation lisible par ordinateur mémorisant une instruction d'ordinateur qui, à son exécution, conduit à la mise en œuvre d'étapes selon l'une des revendications 1 à 13.
